# EUROPEAN PATENT APPLICATION

(11) **EP 4 564 272 A1**
(43) Date of publication of application: **04.06.2025**
(21) Application number: 24212356.0
(22) Date of filing: 12.11.2024
(51) Int. Cl.: G06Q 30/0601

(54) **REGENERATING VIEWS BASED ON PROMPTS AND USER HISTORY**

(30) Priority: 01.12.2023 US 202318527044
(71) Applicant: eBay Inc., San Jose, CA 95125 (US)
(72) Inventor: HARO, Antonio, San Jose, 95125 (US)
(74) Representative: Müller-Boré & Partner Patentanwälte PartG mbB

(57) **Abstract**

The technology disclosed herein relates to the generation and regeneration of three-dimensional environments for users to visualize particular items within the three-dimensional environment. For example, an indication for generating a three-dimensional environment associated with a search query can be received. Previous user interaction data associated with a user providing the indication can be identified and provided to a generative artificial intelligence model. The generative artificial intelligence model can be trained using prior user interaction data from a plurality of other users. In some embodiments, the generative artificial intelligence model can also be trained using a plurality of item features for an item within an item corpus to identify particular images of items associated with a particular style that corresponds to the search query and the previous user interaction data of the user. In embodiments, three-dimensional environments can be generated with items that are associated with the particular style.

## Description

### BACKGROUND

E-commerce search software provides users with search results based on search queries and search criteria, and offer users a shopping experience that allows them to find an intended result. For example, an e-commerce platform can analyze and index product data and other e-commerce data for users of the e-commerce platform to find suitable options. These types of software can provide intelligent product recommendations.

### SUMMARY

At a high level, aspects described herein relate to generating and regenerating environments (e.g., a three-dimensional environment via an e-commerce platform) for users to visualize various items associated with a particular environment. For example, an environment may be an indoor room (e.g., a living room, a bedroom, an office, etc.), an outdoor venue, an outdoor patio, inside a particular vehicle or inside a particular compartment of the vehicle, inside of a refrigerator or freezer, another type of environment, etc. The items for the office could include a desk, chair, sofa, book shelf, wall art, a rug, and the items within the office could be generated / regenerated based on dimensions of the office and based on a color scheme or style associated with prior user interactions (e.g., previously browsing built-in cabinetry and images of offices having dark hues) of the user for which the office is being generated, for instance. As another example, the refrigerator environment could be generated based on an actual photograph of the refrigerator uploaded by the user or a stock image of the same type (e.g., make, model, year) of refrigerator that the user has, and the regeneration of that refrigerator environment could be based on items previously identified within the uploaded image or prior user interactions (e.g., previous purchases of consumable items, previous searches of consumable items) and based on the dimensions of the shelving in the refrigerator environment.

In embodiments, an indication to generate a three-dimensional environment may be received. In some examples of this embodiment, the indication to generate the three-dimensional environment is associated with a user providing a search query (e.g., a textual search query, an audio search query, etc.). As an example, the search query may correspond to one or more items, which may be included within an item corpus for retrieval for generating the three-dimensional environment. To illustrate, the item corpus may include images of items offered by sellers on an e-commerce platform, such as parts for vehicles or accessories for vehicles, as well as furniture, room accessories and décor, containers for consumable items, etc. Further, in embodiments, previous user interaction data that corresponds to the indication can be identified, and the previous user interaction data can be associated with a user who provided the indication to generate the three-dimensional environment.

In embodiments, one or more generative artificial intelligence models can be trained for item identification within the item corpus, such that the identified items can be used in the generation / regeneration of the three-dimensional environment. For example, in embodiments, one or more generative artificial intelligence models can process the previous user interaction data of a particular user for determining a particular style associated with that user, the previous user interaction data being associated with the search query provided by that user, so that particular items can be identified to be display within the three-dimensional environment. In embodiments, one or more generative artificial intelligence models can be trained on prior user interaction data from a plurality of other users (e.g., the training data having labeled styles included within the prior user interaction training data) so that the one or more generative artificial intelligence models can identify a style associated with both the particular user and a current search query. By way of example, one or more generative artificial intelligence models may include a large language model, Bidirectional Encoder Representations from Transformers, etc., for search query processing, prompt generation, and feedback analysis. For example, one or more of these generative artificial intelligence models may receive an input, such as a search query, an item listing, or feedback provided by the user in response to an initial generation of a three-dimensional environment. In these ways, one or more items can be identified (e.g., based on a user style identified, based on item listings having that particular style, based on item listings identified from previous user interaction data of the user, etc.) to include in the three-dimensional environment.

Further, in some embodiments, one or more generative artificial intelligence models (e.g., generative adversarial networks, variational autoencoders, other types of autoencoders, etc.) can be used for generating the three-dimensional environment and the items within the environment based on processing by the language processing model. As one non-limiting example, one or more of a large language model, Bidirectional Encoder Representations from Transformers, another language model, or one or more combinations thereof, can identify particular items within an item corpus to include in the environment based on previous user interaction data of a user who provided a search query, and a generative adversarial network, a variational autoencoder, another type of imaging model, or one or more combinations thereof, can generate the environment to include the identified items. In some embodiments, the three-dimensional environment can be regenerated based on feedback (e.g., textual or audio feedback received from various prompts or facial expression feedback from the user in response to initially generating the three-dimensional environment) provided by the user in response to generating an initial environment.

This summary is intended to introduce a selection of concepts in a simplified form that is further described in the Detailed Description section of this disclosure. The Summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 includes an example operating environment suitable for generating and regenerating three-dimensional environments for item visualizations, in accordance with an embodiment described herein;
FIG. 2 illustrates an example three-dimensional environment comprising a plurality of items, in accordance with an embodiment described herein;
FIG. 3 illustrates another example three-dimensional environment, in accordance with an embodiment described herein;
FIG. 4 illustrates another example three-dimensional environment, in accordance with an embodiment described herein;
FIG. 5 illustrates an example flowchart for three-dimensional environment generation, in accordance with an embodiment described herein;
FIG. 6 illustrates another example flowchart for generative artificial intelligence training for three-dimensional environment generation, in accordance with an embodiment described herein; and
FIG. 7 is an example user device suitable for implementing the described technology, in accordance with an embodiment described herein.

### DETAILED DESCRIPTION

General query searching refers to the process of using a search engine to find information over a network, such as the Internet (e.g., by entering text queries). For these general search queries, users can input a series of words or phrases into a search system, and the search engine returns a list of items, including web pages, documents, images, or other types of files that are considered relevant to the query.

Generative artificial intelligence (Al) is a category of machine learning models that are capable of creating new data samples that are similar to a given set of training data. This includes tasks such as generating text, images, or music, and is often associated with various deep learning techniques. The use of conventional generative AI models with search engines for image detection and generation of a specific existing digital image remains challenging. For example, conventional search engine and digital image generation systems have disadvantages in accuracy, efficiency, and flexibility.

To illustrate, many conventional search engine and digital image generation systems inaccurately or inefficiently detect and generate digital images, such as digital images that are not in accordance with a true intent of the user providing a particular search query. For instance, conventional systems often identify and generate digital images based on arbitrary sampling or training, and therefore, cannot adapt to scenarios where generating specific digital images is required, such as particular images associated with prior user interactions or particular images associated with a particular style of preference of a user. Further, some conventional systems are too slow or improperly trained for on-the-fly image generation and manipulation. As another example, to determine particular digital images to generate, many conventional systems learn a mapping via a Gaussian distribution of an image domain, which results in either the random sampling of arbitrary digital images in a target domain or an inaccurate generation of digital images. In these ways, these conventional systems can thereby fail to generate high quality, realistic images that are specific to a particular user's preferences or a particular user's intended search results when there is little training data or improper feedback utilization, thereby falling short when only a few images of a subject are available or when insufficient or too little user feedback is available.

Furthermore, enhanced and more targeted search techniques for image searching and subsequent generation are integral to the technical function of e-commerce search systems primarily due to the volume of available online content or available stored content and the diversity of this content. For example, the Internet hosts billions of web pages, images, videos, social media data, advertising data, and other forms of data. Without sophisticated search and ranking algorithms, it would be arduous to find and process the relevant information in this vast sea of content. Further, most digital e-commerce platforms store user activity data and other data in tables, which is often used to make predictions or other downstream analyses. Conventional neural semantic parser models, for example, attempt to learn joint representation of natural language text and the structured schema of database tables, however, the information stored in these database tables exhibit a strong underlying structure having short and discrete entries. That is, the structure of the natural language text stored therein inhibits the storage of free-forming natural language text.

Existing language models that are solely trained or fine-tuned for encoding free-forming natural language text of many characters (e.g., trained on books, web pages, letters, or other documents that have many natural language sentences or paragraphs) are not suitable for performing operations using data from a table containing one word in each column, where each word is unrelated, and where the values within the table can also be numbers, thereby making any natural language processing inaccurate or impossible. Recurrent Neural Networks (RNN), such as Long Short Term Memory (LSTM) models, for example, typically use prior sequential context of natural language words to predict the next word, which would be nearly impossible to do with tabular data. Further, a database table could potentially have a large quantity of rows (e.g., thousands), and encoding all of them using a resource-heavy language model with token input constraints can be an infeasible and arduous task.

With respect to the imaging models that can generate an output for a digital image, some conventional digital imaging systems utilize neural networks based purely on unlabeled datasets. As a result of the training on these unlabeled datasets, these conventional systems learn representations that are entirely disconnected from the semantics of the digital content displayed in the digital images and that are disconnected from the true intent of the user who provided a search query. For example, the digital content for a scene or background can be unrelated to the rest of the digital content. Further, many conventional digital imaging systems lack control over defining particular visual digital content boundaries and incorporating particular changes to the digital content. Due at least in part to their lack of semantic consideration, conventional digital imaging systems often generate digital images with inaccurate representations of digital content, such as by placing certain digital content (e.g., a computer) in illogical or otherwise undesirable locations (e.g., in an oven).

It is desirable for e-commerce methods and systems to accurately identify particular item listings associated with a user's true intent and to provide visualizations to the user that are instrumental in assisting the user in making thorough and informed decisions with respect to particular item listings. It is also desirable to enhance computer network component communications between or among the e-commerce system components, and between the e-commerce system and the client devices of the users who are utilizing the e-commerce platform. The technology described herein achieves these goals and provides various improvements to the problems specific to the prior systems discussed above.

For example, the technology discussed herein can generate high quality, realistic digital content visualizations that are specific to a particular user's preferences or a particular user's intended search results based on improved and more efficient training and based on improved feedback utilization. By way of example, the technology discussed herein can also reduce excessive computer input I/O operations (e.g., excess physical read/write head movements on nonvolatile disk) by reducing the amount of time each operating system or other component processes a user request based on the technology providing enhanced visualizations for particular item listings associated with the user's true intent, rather than continuously receiving user-provided search queries and filtering suggestions to arrive at the intended item listing. Further, by enhancing the search operations and providing visualizations that are more illustrative and detailed with respect to search results, the technology described herein also reduces the physical wear on storage components, because the user device has to reach out to the storage device to perform a read or write operation each time the user reenters a search query, adds search query term descriptions, or applies various filters. (Read/write heads, for example, are very mechanical in nature and subject to information access errors because of the precise movements they must make when locating particular images. Such information access errors are more likely to occur when there is excessive computer I/O. Moreover, each repetitive input (e.g., reentering a search query, adding search query term descriptions, or applying various filters) also requires the data to be saved to memory, thereby unnecessarily consuming storage space.)

In embodiments of the present disclosure, a computer-implemented method begins by receiving an indication to generate a three-dimensional environment (or another dimensional environment), the three-dimensional environment being associated with a search query. In some embodiments, the indication to generate the three-dimensional environment can include the receipt of a selection (e.g., via a selectable icon) to generate the three-dimensional environment, a user voice input at a digital assistant, a particular input at search engine, etc. In some embodiments, the search query may be a text-based search query, an audio-based search query, or an image-based search query.

Based on receiving an indication, previous user interaction data corresponding to the indication can be identified, such that the previous user interaction data is associated with a user providing the indication. In some embodiments, the "user" may correspond to a human, a particular entity, a robot, another particular machine, etc. The previous "user interaction data" may include, for example, one or more addresses associated with previous purchases, items or services corresponding to previous purchases, items or services corresponding to previous clicks (e.g., a selection of an item listing or a selection of an image within an item listing), ratings provided for particular items or services, items or services indicated as "liked," items or services indicated as "favorite," other indications or notes provided by the user with respect to an item or service, scrolling within an item listing for a particular period of time, hovering over an image of an item within an item listing for a particular period of time, pauses between viewing item listings for a particular period of time, prior search query keywords or phrases, prior search query modifications and applied filters, other types of prior user interaction data, or one or more combinations thereof.

The term "item" referred to herein may mean something that can be identified in response to a search query (e.g., a search query within an e-commerce platform). For example, an item can be a good, a software product, a tangible item, an intangible item (e.g., computer software, an electronic document, a video of a movie, an audio of a song, an electronic photograph, etc.), document, webpage, or another type of item, or one or more combinations thereof.

The term "item listing" referred to herein generally describes an online listing of an item, which may include a title, one or more images, one or more videos, metadata, an item description, other item listing data, or one or more combinations thereof. While reference may be made to an online marketplace utilizing the disclosed technology to identify and retrieve items and item listings for generating and regenerating three-dimensional environments (or other dimensional environments), it will be understood that the technology discussed herein may be used in a more general context of an online search engine (e.g., that identifies and retrieves web results, that provides answers in response to a search query, that provides related searches, that provides or identifies advertisements, that provides other types of results, or one or more combinations thereof).

In embodiments, the previous user interaction data can be identified from a user history graph or table having particular user interactions that are ranked using particular weights (e.g., higher weighting for user interactions within a particular time period compared to other time periods, higher weighting for user interactions by users who are similar to the user providing the indication to generate the three-dimensional environment compared to other users who have lower similarity scores, higher weighting for user interactions with items listings of a particular category, higher weighting for user interactions with item listings including items having a particular color or pattern, higher weighting for user interactions associated with a particular number of views of an item listing, higher weighting for user interactions with items listings having a particular keyword within the description of the item listing, higher weighting for user interactions with items listings having a particular rate (e.g., above 4.8 stars and above 200 ratings), higher weighting for user interactions with items listings having a particular number of shares on a particular social media platform, etc.). In some embodiments, the previous user interaction data can be identified and the environment can be generated by utilizing one or more machine learning models (e.g., a convolutional neural network, recurrent neural network, a deep learning model, a gradient boosted decision tree, a random forest decision tree, another type of decision tree, a generative adversarial neural network, a regression model, another type of machine learning model, or one or more combinations thereof).

In embodiments, the previous user interaction data can be used for determining a style with respect to the three-dimensional environment that is associated with the user. For example, when generating a bedroom that includes items such as a bed, a dresser, and lighting, a particular style associated with the bed, dresser, and lighting can be determined based on a size of the bedroom, prior views of a plurality of beds, prior views of a plurality of lighting, and prior views of a plurality of dressers. By way of illustration, the particular style of the user could be Victorian that includes an array of restful colors with floral patterns and a white or ivory bed with a cast iron bedframe with brass detail, and this could be determined by analyzing the previous user interaction data (e.g., prior item listing views by the user). For example, the user may have previously viewed Victorian style bedding, wallpaper, or rugs over a threshold number of times. As another example, the user may have previously purchased a Victorian style dresser or previously "liked" a plurality of Victorian style bed over a threshold number of times (e.g., using an e-commerce platform or a social media platform).

In embodiments, one or more generative artificial intelligence models can be used for determining the three-dimensional environment, such as the example having the bed, dresser, and lighting items and for generating the three-dimensional environment of the bedroom (e.g., based on a style corresponding to the user). For example, the generative artificial intelligence model may be a combination of various models that can generate one or more images from textual inputs (e.g., textual inputs including item listing details of identified items, textual search queries, etc.). As another example, a generative artificial intelligence model may be a Generative Adversarial Network (GAN), an autoencoder (e.g., a variational autoencoder, a denoising autoencoder, a convolutional encoder, etc.), a transformer model, another type of generative artificial intelligence model capable of image generation, or one or more combinations thereof. In some embodiments, the determined images for the bed, dresser, and lighting from an item corpus can be included within the three-dimensional environment based on a spatial mapping using dimensions of the three-dimensional environment (e.g., dimensions from a specification stored in a database for a particular vehicle or refrigerator of the user, dimensions from an image of the three-dimensional environment uploaded by the user) and dimensions of the items.

In some embodiments, a generative artificial intelligence model is trained to identify an item feature within the image of an item (e.g., a Victorian item feature) associated with a search query item (e.g., a search query for "bedroom sheets"). For example, the model can be trained using a training dataset including prior user interaction data from a plurality of users (e.g., prior user interaction data from other users who made previous purchases associated with Victorian bedroom style items), such that the training dataset includes a plurality of item features (e.g., brass features or cast iron features of a bed) for each of a plurality of items (e.g., king beds, queen beds) within an item corpus (e.g., an item corpus associated with items available via an e-commerce platform). In some embodiments, a generative artificial intelligence model is trained to identify key points of the item within the image as well as key points of a three-dimensional environment suitable for containing the items, so that the items can be methodically placed within the three-dimensional environment. In implementations of this embodiment, one or more re-projection error algorithms or perspective-n-point algorithms can be used to reduce misaligning the items within the three-dimensional environment (e.g., so that a bed does not take up the entire room, or so that a couch is not placed to obstruct a view from a window). In implementations of this embodiment, one or more texture filling neural network models can be used for generating a feature of an item (e.g., a fluffy texture of bedding or a leather texture of the seating within a vehicle) within the three-dimensional environment or a feature of the three-dimensional environment (e.g., a texture of a wall within a room).

Based on providing the previous user interaction data to the one or more generative artificial intelligence model and based on item identification, the three-dimensional environment can be generated for the user. In embodiments, the three-dimensional environment can be generated using point-based segmentation, voxel-based segmentation, another type of three-dimensional environment generation, or one or more combinations thereof. For example, the point-based segmentation may involve employing a series of multi-layer perceptron blocks and the voxel-based segmentation may involve employing a stack of sparse convolutional layers and using down-sampling and up-sampling of layers to voxel coordinates into discrete locations (e.g., based on spatial mapping using dimensions of the three-dimensional environment and dimensions of the items, based on key points identified within the items and within the three-dimensional environment). In some embodiments, one or more generative artificial intelligence models can utilize iterative loss functions or values (e.g., square error, absolute error loss, quadratic loss, L2 loss, squared error loss, etc.) to learn item features corresponding to a particular style.

For example, item features corresponding to a particular style can be learned using a feedback loop, wherein the feedback includes user feedback in response to a prompt or facial reaction feedback from the user after the user has viewed an initially generated three-dimensional environment. Feedback received from a prompt or selection within the three-dimensional environment can include, using the example above, an indication to change a color of a comforter for the bed or to change a particular color within a pattern of the comforter, the pattern having a plurality of colors. As another example, feedback could also include, an indication to alter the thickness of a mattress for the bed, an indication to increase or decrease the size of the bed frame, an indication to find a bed having a taller headboard, an indication to move the bed to a different location within the three-dimensional bedroom (e.g., to move the bed closer to the window), etc. In some embodiments, this particular feedback can be used to regenerate the three-dimensional environment.

In some embodiments, a three-dimensional environment software package or another dimensional environment software package can overlay the determined item listing images within an application executing or presenting the environment. As an example, environment software package overlaying the images can include development tools, such as source code, code libraries, application programing interfaces (APIs), compilers, data assets, etc., that enable an application (or application administrator) to integrate an environment software package overlay editor (e.g., that can communicate with the e-commerce platform) within an application executing or presenting a particular environment. For instance, the overlay editor data package can include a software development tools that can integrate an overlay editor within an application executing or presenting the particular environment.

Having provided some example scenarios, a technology suitable for performing these examples is described in more detail with reference to the drawings. It will be understood that additional systems and methods for providing the improved search results and navigation can be derived from the following description of the technology.

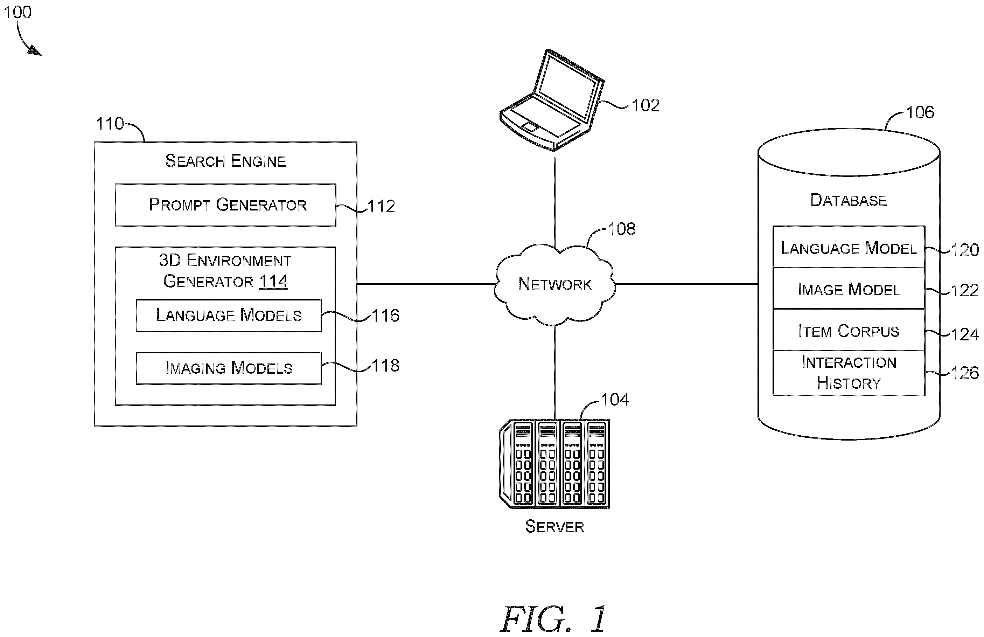

Turning now to FIG. 1, FIG. 1 illustrates example operating environment 100 in which implementations of the present disclosure may be employed. In particular, FIG. 1 illustrates a high-level architecture of operating environment 100 having components in accordance with implementations of the present disclosure. The components and architecture of FIG. 1 are intended as examples, as noted toward the end of the Detailed Description.

Example operating environment 100 includes user device 102; a server 104; a network 108; a search engine 110 comprising a prompt generator 112 and a three-dimensional environment generator 114 including language models 116 and imaging models 118; and a database 106 comprising language model data 120, image model data 122, an item corpus 124, and a user interaction history 126.

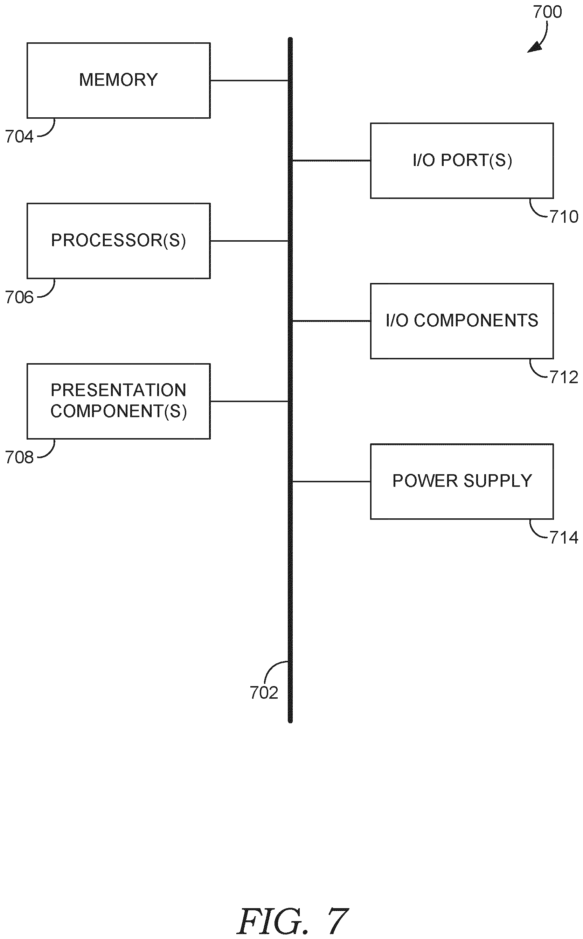

The user device 102 may be a device that has the capability of using a communications network, and may also be referred to as a "computing device," "mobile device," "client device," "user equipment," "wireless communication device," or "UE." A user device, in some embodiments, may take on a variety of forms, such as a PC, a laptop computer, a tablet, a mobile phone, a PDA, a server, or any other device that is capable of communicating with other devices (e.g., by transmitting or receiving a signal) using a wireless communication. Broadly, the user device 102 can include computer-readable media storing computer-executable instructions executed by at least one computer processor. One example of a user device includes computing device 700 described herein with reference to FIG. 7.

As illustrated in example environment 100, the user device 102 may be capable of communicating with the search engine 110, the server 104, or the database 106 over the network 108. Other embodiments of example environment 100 may include additional user devices. The user device 102 may be operated by a user, such as one or more of a person, machine, robot, other user device operator, or one or more combinations thereof.

In embodiments, network 108 may be a local area network (LAN), a wide area network (WAN), a mesh network, a hybrid network, or other wired or wireless networks. Network 108 may be the Internet or some other public or private network. The user device 102 can be connected to network 108 via a network interface, such as by wired or wireless communication. Other embodiments of example environment 100 may include additional servers that are connected to the network 108.

Generally, server 104 is a computing device that implements functional aspects of operating environment 100. In embodiments, server 104 represents a backend or server-side device. In some embodiments, the server 104 can be an edge server which receives user device requests (e.g., a search query, an indication to generate a three-dimensional environment, user provided feedback in response to generating the three-dimensional environment, requests to regenerate the three-dimensional environment, etc.) and coordinates fulfillment of those requests (e.g., sometimes through other servers).

In addition, the server 104 can comprise computing devices, such as computing device 700 of FIG. 7. Though the server 104 is displayed logically as a single server, the server 104 can be, in other embodiments, a distributed computing environment encompassing multiple computing devices located at the same physical geographical location or at different physical geographical locations. In some embodiments, the server 104 can connect to the database 106 or, in other embodiments, the server 104 can be in communication with a plurality of servers that each share the database 106 or that each have their own database, for example.

In embodiments, computing device 102 is a client-side or front-end device and the server 104 is a backend or server-side computing device. The server 104 and the computing device 102 may, in some embodiments, implement functional aspects of example operating environment 100, such as one or more functions of search engine 110. It will be understood that some implementations of the technology will comprise either a client-side or front-end computing device, a backend or server-side computing device, or both executing any combination of functions from search engine 110, among other functions or combinations of functions.

The database 106 generally stores information, including data, computer instructions (e.g., software program instructions, routines, or services), or models used in embodiments of the described technologies. For instance, database 106 may store computer instructions for implementing functional aspects of search engine 110. Although depicted as a single database component, database 106 may be embodied as one or more databases (e.g., a distributed computing environment encompassing multiple computing devices) or may be in the cloud. In other embodiments, the language models 120 and the image models 122 are stored in separate databases. In embodiments, the search engine 110 can be configured to run any number of queries on the database 106.

Item corpus 124 may include item listings. In aspects, an item corpus includes items offered on an e-commerce platform, the item listings having item descriptions corresponding to the items and images for the items. That is, the item corpus 124 may include a broad database of textual and general descriptive information. For instance, the item corpus 124 may include a wide range of sources associated with item listings, such as websites, books, Wikipedia, scientific articles, news outlets, technical manuals, movie scripts, programming code, educational materials, and other texts, which can generate a broad understanding of human language (e.g., in which language model 120 can be trained on a dataset comprising such texts). As another example illustration, the item corpus 124 may, in some embodiments, include millions of item listings or hundreds of millions of item listings.

In example embodiments, the item corpus 124 can include a search index that can be used by the search engine 110, such as an inverted index, but other index forms are also possible. For example, the search index may include one or more tables of categories for each item within the search index, one or more tables of item features for each item within the search index, one or more tables of particular styles associated with each item within the search index, one or more tables of search results associated with particular search queries or keywords within search queries, one or more tables of search results associated with particular three-dimensional environments (e.g., one or more three-dimensional vehicle environments) and the items provided within the environment, one or more tables of search results or environments associated with particular feedback provided by users in response to three-dimensional environment generations, another type of table, or one or more combinations thereof. In some embodiments, the item corpus 124 may be discrete components separate from search engine 110, or may be incorporated or integrated into the search engine 110 in other embodiments.

In embodiments, the item corpus 124 including the inverted search index can include item listings that each correspond to a particular position within the index. For example, the inverted search index can include a plurality of item listings that have a particular position associated with an item vector including an array of values that represent the item within the item listing. As another example, each of the item vectors may be an embedding generated by a neural network based on a particular style of the item, particular colors, dimensions or sizes, or other features associated with the item, particular categories associated with the item, particular user interactions associated with the item, etc. In some variations of this embodiment, an embedding for a particular item may be a dense embedding having a smaller number of values within the embedding, such that the dense embedding corresponds to a particular style or a particular user interaction associated with the item so that the search engine 110 can quickly identify a particular item vector (compared to a longer item vector). As another example, the embedding for a plurality of items may be dense embeddings that are generated based on particular feedback provided by a user in response to the user being provided with a particular three-dimensional environment.

In embodiments where the one or more tables of the search index (e.g., an inverted index) include particular styles, the particular styles may be associated with particular item features, particular items, particular groupings of items or item features, particular groupings of similar users and associated historical interaction histories, etc., or one or more combinations thereof. For example, a style may be determined for particular item listings of dresses having a threshold number of female purchasers within a particular age range, with delivery addresses within a particular geographical area, the particular item listings of dresses having a threshold number of common item features (e.g., a particular dress length, a particular color or pattern, a particular neck style). As another example, a style may be determined for particular item listings of post-war classic cars having a threshold number of male purchasers within a particular age range, with delivery addresses within a particular geographical area, the particular item listings of post-war classic cars having a threshold number of common item features (e.g., an era such as the 1970's, a particular color or pattern, a particular make or model). As a non-limiting example, the one or more tables may contain particular columns (e.g., a column for user delivery location, vehicle make, vehicle model, vehicle era). In some embodiments, the one or more tables may be used for style determination (e.g., identifying a style for a user searching for a "classic car" as a "post-war classic car" based on using the one or more tables to identify that the majority of males with a similar delivery address and age range most commonly purchased "post-war classic" vehicles or vehicle accessories). In other embodiments, the one or more tables of the search index can include previous user interaction data of the same user who entered in a search query, such that a table includes a plurality of search queries previously entered at a plurality of websites and applications, wherein columns of that table include keywords associated with a current search query for identifying the style associated with that current search query.

User interaction history 126 within database 106 can include generated data structures associated with user interaction histories for one or more users, such as log records or statistics associated with user interaction histories for one or more particular users in multiple tables. For example, particular embodiments can use a cookie at the search engine 110 (to track specific user interactions with the search engine), a user device fingerprint, a geocoded indicator (e.g., a GPS location), an IP address of user device 102 (to track the identification of the user device 102 associated with a particular user and particular interactions), or another type of user interaction tracking method to populate a data structure (e.g., relational database tables in real-time or near real-time).

For example, in response to a user interacting with the search engine 110 (e.g., via clicks associated with an interface provided by the search engine 110) or in response to the user interacting with another platform based on the cookie at the search engine 110, the data structure can be responsively populated or incremented, in real-time or near real-time, corresponding to the user interactions in a log, a hash map, or another structure under the appropriate table and column (e.g., a table for users who interacted with a particular "traditional" couch style and a column for a particular number of purchases or ratings of that couch style). To illustrate, a particular row or column within the data structure can be incremented, via counter logic, based on a quantity (e.g., of clicks, purchases, "likes," shares via a particular social media platform or a plurality of social media platforms) in a database table. As another illustration, the particular row or column within the data structure can be incremented based on a number of pauses between viewing item listings for a particular period of time (e.g., based on the number of pauses by the user device 102 or the number of pauses of a particular grouping of similar other users). Responsively, such information is stored within the database 106, which can be accessed or extracted for further analysis by the search engine 110.

The database 106 can include training data for training the language models 120 for implementing the trained language models 116 of the search engine 110 for identification of items within the item corpus 124 to generate the three-dimensional environment. The particular training data, for example, can include particular extracted data from the item corpus 124, the interaction history 126, or one or more combinations thereof. For example, the training data can include user interaction data from a plurality of users associated with a particular style of a particular set of items. In a non-limiting example for a living room environment, the particular style could be traditional colonial with symmetrical designs and simple and soft tone colors, the plurality of users may include users located within a particular location within the United Kingdom, and the particular set of items may include living room furniture. In another non-limiting example, the particular style could be Klismos Greek design chair having a curved backrest and inward curved legs, the plurality of users may include users having a Greek surname or first name, and the particular set of items may include Klismos Greek design chairs from the 1700's. To illustrate, the training dataset may include particular dimensions associated with a furniture item (e.g., item listings having tagged dimension data), particular tagged keywords within the description of the item listing, or particular user names associated with a particular geographical region (e.g., surnames of Greek origin), such that one or more of the trained language models 116 could be used for determining particular Klismos Greek design chairs from the 1700's for a particular three-dimensional environment for a particular user based on keywords within descriptions of item listings in the item corpus 124, based on dimensions of the Klismos Greek design chairs from the 1700's, and based on prior user purchases of Klismos Greek design chairs from the 1700's by users having a surname of Greek origin.

As another example, the training data can include user interaction data from a plurality of users who own a particular make and model of a particular vehicle or from a plurality of users who own a particular make and model of a particular drone. In a non-limiting example, the particular style could be that particular make and model, and the particular set of items in these examples could include particular vehicle or drone parts. To illustrate, one or more of the particular vehicle parts could include an electric vehicle battery pack, an internal combustion engine, an electric motor, a transmission, a cooling system, power steering systems, brake components, etc. Additionally, one or more of the particular drone parts could include propellers, batteries, an electronic speed controller, landing gear, cameras and gimbals, antennas, a flight controller, a propeller guard, Wi-Fi or first person view modules, charging components, etc. In some embodiments, fine-tuning one or more of the language models 120 may involve using the training data to hone in more closely to items having particular ratings by a particular number of users, or honing in on particular brands having a higher quality than other brands. By way of another illustration, in some embodiments, the particular style could be a dashboard style (e.g., having a particular screen size) for vehicles or non-commercial planes, and the particular set of items for this screen size dashboard style in this example could include particular dashboards of various models having particular capabilities (e.g., a particular resolution, particular antenna capabilities).

In some embodiments, the training datasets can be used to train the language models 120 for the transfer of learning from related tasks, wherein one or more of the language models 120 are initially trained on a task that is similar, but not identical to, the target task (e.g., the target task being identifying item listings for a minimalist style for an indoor room that has a sleeker appearance with straighter lines between the spacing of the furniture and more symmetrical furniture items compared to a modern style, and the similar task being for a modern style), and then is fine-tuned on the target task of interest. For instance, some of the language models 120 can be initially trained for the modern style, and then each can be further fine-tuned for deviations of that modern style (e.g., a minimalist style, a modern style for a bedroom and another fine-tuned for a modern style for a living room). In some embodiments, this fine-tuning can also implement tuning for particular ratings by a particular users or tuning for particular brands previously purchased by the user in which the environment is being generated for.

In some embodiments, one or more training datasets can be used to train one or more of the language models 120 for multi-task learning, wherein the language models 120 are trained to perform multiple tasks simultaneously (e.g., determining both similar user interactions and prior views and purchases by the particular user related to the generation of the particular environment), sharing representations between them to improve overall performance. For example, for identifying similar user interactions, one training data set can include labels for the particular names associated with the particular geographical region, such as surnames of Persian origin, and labels for surnames that are not of Persian origin, such as surnames of Arabic or Armenian origin but can closely resemble that of Persian origin. As another example, for identifying prior views and purchases, another training data set can include labels for particular styles associated with a particular Persian furniture item, the labels being included within an inverted index table of the user's previous interaction data. In some embodiments, one of the language models 120 determines the similar user interactions and another one of the language models 120 determines the prior views and purchases from the table simultaneously, the shared representations being associated with the particular Persian furniture item. In embodiments, the multi-task learning can take the form of both supervised and unsupervised learning. These training methods can be standalone approaches or can be integrated with other techniques to create a more robust and versatile model.

In some embodiments, one or more of the language models 120 can be trained to determine items for environments based on various user interaction histories 126 for particular users having a particular age and demographic. For example, an example three-dimensional environment could be a home movie theater for a user born in 1987, and items for the home movie theater may be identified by using user interaction data for item listings that correspond to a first style (e.g., a home movie theater with a 90's style), wherein the interaction data was extracted from the interaction histories 126 for users who were born between 1986 and 1988, and wherein those users all currently live within a particular city. In embodiments, one or more of the language models 120 can be trained to identify particular prior user interaction data for a user born within the same time period and living within the same city upon a user providing a current search query associated with the first style, and one or more of the language models 120 can also be trained to identify particular items for the home movie theater with a 90's style based on this particular prior user interaction data. As another example, certain prior user interaction data for the particular user providing the search query can also be identified based on the prior interaction data of those similar users (e.g., particular popcorn makers identified from the similar users having the similar age and demographic can be identified, and item listings for those particular popcorn makers that the particular user interacted with can be identified and used for item determination). By way of example, an item listing (e.g., a particular popcorn maker) that has the most purchases or the most views by the other users of the same age and demographic may be identified as an item listing of interest for the current searcher.

As another example, the user interaction data for the similar users having the particular age or demographic could include user interaction data for item listings with items that correspond to a second style (e.g., a home movie theater with a 1950's style), wherein the interaction data was extracted from the interaction histories 126 for users who were born during WWII, and wherein the users were all born in a particular city (e.g., New York City). In this example, an item listing that has the highest ratings by these similar users, compared to other item listings including the same item (e.g., a seating item of a particular color), provided by the other users of this same age range and demographic birthplace may be identified as an item listing for the three-dimensional environment. In yet another example, the particular demographic could additionally or alternatively be one or more of the following: gender, income, profession, residence location, marital status, education level, language, life stage, job industry, retirement status, dietary preferences, residence type (e.g., urban, suburban, rural), climate of residence, interests and hobbies, type of technology owned and used, or another type of demographic, or one or more combinations thereof.

In some embodiments, one or more language models 120 can be trained to identify an item feature within an item listing associated with an item corresponding to the search query to provide that item within the three-dimensional environment. For example, training datasets can include prior user interaction data, from a plurality of users, which includes a plurality of item features (e.g., colors, sizes) for each of a plurality of items within the item corpus 124. By way of illustration, prior user interaction training datasets can include labels for particular a particular style associated with the search query. For instance, the particular style could be a Pikachu themed three-dimensional bedroom environment, and some of the items identified for this environment could include item listings having "Pokémon" labels or "solid canary yellow" labels (e.g., solid canary yellow bed sheets and pillow cases). In this example, one or more language models 120 could be trained to associate Pikachu with a particular yellow color for the subsequent generation of a room that is more aesthetically pleasing, instead of generating a room that solely includes the Pikachu character throughout every location within the room. In another example, the particular style could be princess themed, and some of the identified items for a playroom environment could include item listings having "Frozen" or "Elsa" labels. Similar to the previous example, in this example, one or more language models 120 could be trained to associate "Frozen" or "Elsa" with the color blue, and blue or white with glitter to subsequently generate a room that is more aesthetically pleasing, instead of generating a room that solely includes the princess character.

In embodiments, a training dataset can additionally or alternatively include prior search queries (e.g., for training natural language models to expand the search query, parse the database 106, associate particular items with particular styles, identify associated entities, rank keywords based on query relevance, etc.). In the Pikachu style example above, the prior search query training dataset could comprise various natural language search queries associated with a cartoon or fictitious characters (e.g., "charmander pillows and stuffed animals," "the little mermaid bedroom décor"), wherein a search query phrase or sentence within the natural language search query is labeled based on an item feature or style associated with the search query. To illustrate, this training data may be used, in some embodiments, to train one or more language models 120 to summarize particular natural language phrases or sentences of a search query to input into another model. For example, a large language model could be trained to generate a shortened query (e.g., "teddy bears") for a search query (e.g., "stuffed animals that are bears"), or trained to generate an extended search (e.g., "live pine trees") for the search query (e.g., "Christmas trees") based on the user's prior interactions (e.g., the user only purchased live Christmas trees in the past) and a determined probability associated with the extended search query. For instance, the shortened query can be a textual summarization that breaks down a longer query to distill the pertinent information while preserving the meaning of the initial query. In embodiments, the shortened query can reduce the time required for one or more language models 120 to grasp or understand lengthy phrases of information without losing vital information. In other embodiments, one or more language models 120 can be trained to generate the extended search queries so that an expanded query vector, having a dimensionality greater than the dimensionality of the initial query vector, can be used to ensure that the relevant search results are identified without elimination of other relevant item listings that the user would have otherwise considered (e.g., a larger live pine tree that fills a room more prominently than an artificial and thin "Christmas tree").

In embodiments, one or more language models 120 may include a natural language understanding model, a large language model, a text-to-speech engine, an automatic speech recognition engine (e.g., a recurrent neural network, another transformer model, or another type of machine learning technique that can perform automatic speech recognition), Bidirectional Encoder Representations from Transformers (BERT), embeddings from language models (ELMo), bidirectional long short-term memory network (BiLSTM), etc., or one or more combinations thereof.

In some embodiments, one model within the language models 120 is a larger model than another language model of the language models 120. In some embodiments, the larger model has a higher number of transformer layers than the smaller model. In some embodiments, one model within the language models 120 has a larger hidden size of an individual transformer layer than that of another language model. In some embodiments, one model within the language models 120 can have a largest number of trainable parameters compared to the other language models.

In some example embodiments, a first model of the language models 120 can be pre-trained using another language model, such that the first model mimics the other model via a knowledge-distillation based agnostic (e.g., training a reduced-scale BERT using a full-scale BERT or training a reduced-scale BiLSTM using a full-scale BERT). In some embodiments, a convolutional neural network having connected layers following a convolutional layer, a deep belief network having connected layers, or another speech recognition technique within the language models 120 can be used for speech processing (e.g., for understanding words spoken by a user providing a search query or feedback in response to a generated three-dimensional environment).

Generally, the search engine 110 can receive natural language as input and provide outputs via one or more of the language models 116 based on the natural language received (e.g., via user device 102, via prompt generator 112). In some embodiments, one or more of the language models 116 can expand text-based input to include additional text-based descriptions based on previous user interaction data associated with a particular user. In expanding a text-based input, the search engine 110 via one or more language models 116 may provide additional item attribute outputs corresponding to the text-based input, such as features or characteristics and literal text-based descriptions of these item attributes for an expanded search of items within the item corpus 124. For example, the search engine 110 may receive natural language input from a search query or from user feedback (provided after generation of the three-dimensional environment) provided by a user via user device 102 (e.g., and based on the user device 102 receiving a prompt from prompt generator 112). Based on receiving the natural language input, one or more of the language models 116 can be used to generate an expanded query vector from the search query using one or more additional item attributes (e.g., additional attributes for the "pink dress" being lighter shades of red and deeper shades of orange based off of prior user purchases within the interaction histories 126), such that the expanded query vector has a dimensionality greater than the dimensionality of the initial query vector, thereby enhancing the relevant search result identification without elimination of other relevant item listings that the user would have otherwise considered.

Additionally, in one example implementation, a bidirectionally trained Bidirectional Encoder Representations from Transformers may read an entire sequence of words for a search query at once. Bidirectional Encoder Representations from Transformers can generate a representation of each word based on the other words within the search query, such that the search query "pink dresses for my closet" can represent "pink dresses" within the item corpus 124 based on "for my closet," such that the "closet" of the user providing the search query in considered (e.g., the items within the closet are considered, the size of the closet considered, etc.) for the three-dimensional environment generation. For example, the Bidirectional Encoder Representations from Transformers (or another language model of the language models 116) understands a particular size dress that the user wears for a plurality of different brands (e.g., based on prior user purchases or other prior user interactions), a particular size and organizational pattern of the user's closet (e.g., based on a user profile or an uploaded image that includes an image of the user's closet, prior user purchases or other prior user interactions), and a particular style that the user prefers (e.g., longer dresses that are not sleeveless). For example, one or more of the language models 116 can use the context of both "pink dress" and "for my closet" starting from the bottom of a deep neural network matching the context bi-directionally, such that the pooling performed by the Bidirectional Encoder Representations from Transformers can reduce the dimensions of data within the item corpus 124 to dresses that are pink, dress patterns or styles that the user has an affinity towards, and dresses that conform to the overall style of the clothes within the user's closet.

As another example, one or more language models 116 can generate a representation of each word based on the other words within the search query, such that the search query "motorcycle parts for my motorcycle" can represent "motorcycle parts" within the item corpus 124 based on "for my motorcycle," such that the particular "motorcycle" of the user providing the search query in considered (e.g., the make, model and year, prior purchases for this motorcycle, etc.) for the three-dimensional environment generation. For example, one or more of the language models 116 could be trained to understand a particular size or brand of a particular motorcycle part based on prior "likes," purchases, or views over a threshold period of time by the user for a particular brand of motorcycle parts. For example, one or more of the language models 116 can use the context of both "motorcycle parts" and "for my motorcycle" starting from the bottom of a deep neural network matching the context bi-directionally, such that the pooling performed by the Bidirectional Encoder Representations from Transformers can reduce the dimensions of data within the item corpus 124 to motorcycle parts of a first brand, a style that the user has an affinity towards, or motorcycle parts that conform to the overall style of the motorcycle of the user.

By reducing the dimensions of data within the item corpus 124 as described in the example above (e.g., based on a particular vehicle owned by the user, based on previous user interaction histories, etc.), the presently disclosed technology can improve computer I/O because these embodiments reduce excessive computer user input. For example, a technical solution of reducing the dimensions of data reduces I/O because the user does not have to perform additional drilling, paging, or other user inputs to find the search results the user is searching for. In this way, the user device reaches out to the storage (e.g., database 106) to perform fewer read or write operations, which causes less wear and tear on computing components and less energy utilization. For example, read/write heads are less likely to make information access errors on storage devices because there is not excessive I/O that wears on the read/write heads within a short time span.

Further, in some example embodiments, one or more large language models of the language models 116 can generate one or more API calls for the search engine 110 or database 106 to execute based on a user provided search query or indication to generate a three-dimensional environment. For example, a generated API call can indicate particular item features of items associated with the indication to generate a three-dimensional environment, and in other example embodiments, the API call can further indicate updated particular item features of the items associated with the three-dimensional environment based on user provided feedback upon generation and presentation of the three-dimensional environment to the user. For instance, an initial API call can be for blue item features for a three-dimensional environment associated with a "Frozen" or "Elsa" style of a playroom or bedroom, and the additional API call can be associated with blue glitter or light blue item features in response to the user providing feedback based on the generation and presentation of the three-dimensional environment. As another example, an API call can be associated with particular clothing sizing and style for a three-dimensional closet or dresser environment based on the previous user interaction data associated with that particular user, or the API call can be associated with a particular electronic dashboard component for a three-dimensional vehicle environment based on the previous user interaction data (e.g., previous user purchases of other vehicle parts for a particular make and model of a vehicle).

In embodiments and by way of example, one or more outputs provided by one or more of the language models 116 can include, for example, a probability distribution over a sequence of one or more words or phrases across one or more vocabularies or across one or more item corpus groupings, such that one or more of the words or phrases in the sequence can be selected as the one or more outputs (e.g., a large language model output) based on the probability distribution. For example, the probability distribution can be generated based on prior user purchases and prior user social media "likes" or shares of particular items. The probability distribution can be based on previous user interactions of the particular user or by other similar users, or one or more combinations thereof. In various embodiments, one or more of the outputs can be stored in the database 106 for subsequent utilization in modifying one or more prompt outputs for receiving user provided feedback in response to an initially generated three-dimensional environment.

One or more training datasets stored in the database 106 can be applied to one or more image models 122 for application of one or more trained image models 118 of the three-dimensional environment generator 114 of the search engine 110. For example, one or more image models 118 can be a generative artificial intelligence model including a Generative Adversarial Network (GAN), an autoencoder (e.g., a variational autoencoder, a denoising autoencoder, a convolutional encoder, etc.), a transformer model, another type of generative artificial intelligence model capable of image generation, or one or more combinations thereof. For example, in embodiments, the generative artificial intelligence model can receive both textual and image input as a single stream of data (e.g., the stream containing over a thousand tokens). In an example, the one more image models 122 comprises a diffusion model trained to generate images from an input, such as a text-based input.

In general, one or more of the image models 118 can be used for positioning and sizing items within the three-dimensional environment, stacking items within the three-dimensional environment, controlling attributes of the items within the three-dimensional environment (e.g., sizing, coloring, lighting, hue, shape), controlling angling of the items within the three-dimensional environment, adjusting the environment size, lighting, shading, hue, shape, etc., combining various aspects between or among items (e.g., applying a particular style of one item to a portion of another item), modifying items within the three-dimensional environment, adding or removing items within the environment, applying or modifying various styles to the environments, among other things.

As an example, one or more generative artificial intelligence models of the image models 118 can include a GAN that has two or more neural networks that contest one another in a game, such that one of the neural networks generates a virtual three-dimensional environment with the virtual items and another neural network evaluates the virtual three-dimensional environment and the items therein (e.g., based on the GAN being trained on training datasets of similar environments that include associated items and various item placements, the training datasets corresponding to prior user interaction data, of similar users, with those items). As an example, the GAN can be trained using datasets for living rooms of a particular style associated with a particular geographical location (e.g., associated with a particular culture and location) to determine how to construct the virtual environment. As another example, the GAN can be trained using a first dataset for that living room of that particular style with furniture items being more spaced apart and a second dataset with furniture items being spaced more closely together. In yet another example, the GAN can be trained using living room environment datasets that have more natural lighting within the environment and other living room environment datasets that have less natural lighting within the environment. Continuing this example, the other living room environment datasets that have less natural lighting may include a first set of datasets having more artificial lighting and a second set of datasets having less artificial lighting.

In some instances, multi-scale prediction can be used such that one output from a generative artificial intelligence model can correspond to item placement within the three-dimensional environment and another output corresponds to a satisfaction likelihood of that placement based on previous user interaction data of that particular user. In this example, the GAN may be trained using a reconstruction loss function or an intersection over union function. In addition, the GAN may have discriminators (e.g., for discriminating the items for the virtual environment, for discriminating an item feature of the items within the virtual environment, for discriminating the positioning of the items within the virtual environment, for discriminating an overall style of the environment, for discriminating the lighting within the environment, etc., based on prior user interaction data and determined styles), one or more generators (e.g., having a compression network that can compress images of items or virtual environments or an expansion network that expands the images the items or expands the dimensions of the virtual environment), a feedback network for receiving and implementing user-provided feedback after an initial generation of the virtual environment, an encoder, a backpropagation network, etc.

In some embodiments, a particular GAN of the imaging models 118 may be trained so that the discriminators of the GAN can determine a distribution of how likely a location within the virtual environment will contain a particular item of the item corpus 124 based on the prior user interaction data and a determined style. For example, based on prior use interaction data of a particular user, that particular user may prefer having a bed positioned closer to a window (e.g., based on user-provided feedback received at the prompt generator 112 or based on an uploaded photo of the user's bedroom) or that particular user may prefer having dress pants positioned within a particular location within a walk-in closet environment. As another example, the GAN may be trained so that discriminators can determine a distribution of how likely a particular item would be present within of a particular virtual environment based on the previous user interaction data and a determined style. For instance, based on previous user interaction data of that particular user, that particular user may prefer vehicular speakers that produce a particular range of frequencies compared to other vehicular speaker items that produce different ranges of frequencies. For item placement within a particular virtual environment, the generative artificial intelligence model can identify anchor points (e.g., for the virtual closet environment, the anchor points can include shelves, other clothing that is hanging, hangers, poles, etc.), such that a deep neural network can analyze each of the locations and positions within the virtual environment that the particular user would likely prefer a particular item to be placed.

In some embodiments, the three-dimensional (or another dimension) environment can be generated by the three-dimensional environment generator 114 using a segmentation neural network that processes a particular real-world image of the three-dimensional environment captured and uploaded by the user (e.g., an image of under the hood of the user's vehicle, an image of the user's kitchen). For example, the segmentation neural network can be used for replacing structured code for a portion of the real-world image and maintaining the structured code for another portion of the real-world image (e.g., replacing the structured code for the portion of the real-world image with structured code of an image of an item within the item corpus 124). In some embodiments, one or more encoder neural networks are used for structured code extraction of a portion of an item image (e.g., extracting structured code for the item within the image and not extracting a background portion of the item image), such that a representational structured code for that item can be generated. In some embodiments, one or more clusters of structured code are generated from multiple images of an item for an item listing for generation of the virtual environment with a three-dimensional image of the item (e.g., using the clusters of the structured code from the multiple images of the item to generate the item within the environment). In some embodiments, an autoencoder (e.g., a swapping autoencoder) can be used to generate the modifications to the virtual environment to include the items, or to generate the modified virtual item (e.g., generated from clusters of structured code from a plurality of images of that item) within the virtual environment. For instance, an encoder neural network having a swapping autoencoder can be used for item feature extraction (e.g., latent code extraction including texture code and structure code), wherein in some embodiments, the texture code from one image of the item can be combined with the texture code from another image of that item.

In some embodiments, one or more imaging models 118 can include trained neural networks that can extract spatial codes (e.g., information that takes into account the spatial layout and relationships between different portions of an item captured within an image, the information relating to size, orientation, patterns, item location within the image), global codes (e.g., information describing the image as a whole that can relate to a color histogram, pixel intensity average and standard deviation, image resolution, aspect ratio, image entropy, etc.), local descriptors (e.g., scale-invariant feature transform, speeded-up robust features, binary robust independent elementary features), texture descriptors (e.g., local binary pattern, gray-level co-occurrence matrix statistics, etc.), abstraction level descriptors, color histogram representations, grayscale histogram representations, etc., such that the three-dimensional environment can be generated to include particular items corresponding to the indication to generate the three-dimensional environment.

For example, in one example embodiment, the trained neural networks may extract a global code from one image of a first item and a pixel intensity average from another image of the first item to subsequently generate a three-dimensional item, using the global code of the one image and the pixel intensity from the other image, depicted within the three-dimensional environment. As another example, the trained neural networks can also extract a spatial code from a plurality of images of a first item and texture descriptors from each of the plurality images to generate the first item within the three-dimensional environment. In yet another example, the trained neural networks may use the spatial codes relating to the size of the item and the size of the environment for generation of the item within the environment based on sizes of both the item and the environment.

In some embodiments, one or more imaging models 118 can be trained to identify an item feature within an image of an item (e.g., a particular color, brand, or pattern) associated with a search query item (e.g., a search query for "backpack") based on a training dataset including particular prior user interaction data from a plurality of similar users (e.g., prior user interaction data from other users who made previous purchases associated with backpacks, wherein both the user who submitted the search query for "backpack" and the others user have all previously purchased a plurality of camping items that have a particular camouflage style). For example, the training dataset could include images with each of these camouflage style backpacks, so that one or more generative artificial intelligence models can minimize the differences between a predicted segmentation and ground truth labels. In example embodiments, one or more segmentation techniques can be applied to an image of the camouflage style backpack to identify image segments (e.g., pixel areas within the image that include the camouflage feature on the backpack). As another example, for image segmentation, a convolutional neural network (e.g., a fully convolutional network or U-Nets) can be used to recognize pixel areas of the backpack image that have a camouflage pattern (e.g., through backpropagation) and to also recognize adjacent pixel areas that do not include the camouflage pattern. In some embodiments, based on the ratio of the recognized camouflage pixel areas to the non-camouflage pixel areas, particular items can be included within the three-dimensional environment or excluded from the environment (e.g., based on prior user interaction histories of the user preferring items having a majority of the global item pixel area having the camouflage pattern, the convolutional neural network can be used to include those preferred backpacks and to exclude other backpacks that have smaller global item pixel areas with the camouflage pattern).

In embodiments, the three-dimensional environment including the items can be generated using point-based segmentation, voxel-based segmentation, another type of three-dimensional environment generation, or one or more combinations thereof. For example, an encoder neural network can produce a representation of an item from images of the item within the item corpus 124, such that a decoder (e.g., one or more convolutional neural networks or one or more fully convolutional networks having a plurality of layers) can use the representation to generate a pixel segmentation mask or a voxel segmentation mask for segmentation of the item from the image or images. For example, through the layers of the one or more convolutional neural networks or the one or more fully convolutional networks, details of the item can be determined. By way of example, a series of encoder up-sampling (e.g., via un-pooling layers and based on pooled indices that the encoder stored) followed by convolutional layer processing can be used to generate dense feature data for the item, and normalization can be applied to the dense feature data for the generation of a high dimensional representation of the image. In some embodiments, the pixel segmentation mask or voxel segmentation mask can correspond to category-based probabilistic maps in which the pixels or voxels belong. In embodiments, the output provided by the decoder can indicate three-dimensional mesh surfaces for the item. In some embodiments, the encoder and decoder are pre-trained to learn item shapes of items within the item corpus 124 prior to segmentation so that segmentation leakage or under-segmentation does not occur.

In some embodiments, the generative artificial intelligence model can utilize iterative loss functions or values (e.g., square error, absolute error loss, quadratic loss, L2 loss, squared error loss, etc.) to learn item features corresponding to a particular style. For example, the iterative loss functions or values can be applied in response to user provided feedback upon initial generation of the environment. In some embodiments, a feedback loop can be implemented, wherein the feedback includes user feedback in response to a prompt, or facial reaction feedback received from the user in response to generating the three-dimensional environment. Feedback received from a prompt or selection within the three-dimensional environment can include, for example, an indication to change a color of a particular item within the environment, a particular color within a pattern of the item (e.g., changing only the green portion), an indication to alter the thickness of the item, an indication to increase or decrease the size of the item, an indication to find an item having a different material (e.g., receiving a selection on a portion of the item and indicating to change this wood portion to metal), an indication to move the item to a different location within the three-dimensional environment, an indication to change the three-dimensional environment to a two-dimensional environment, etc. Based on receiving the feedback, the three-dimensional environment can be regenerated. For example, the three-dimensional environment could be regenerated to include a different three-dimensional image of the item based on the user feedback (e.g., the indication to alter the thickness) corresponding to the style associated with the item, the style being provided or determined prior to regenerating the three-dimensional environment. In other embodiments, the style may be updated based on the feedback.

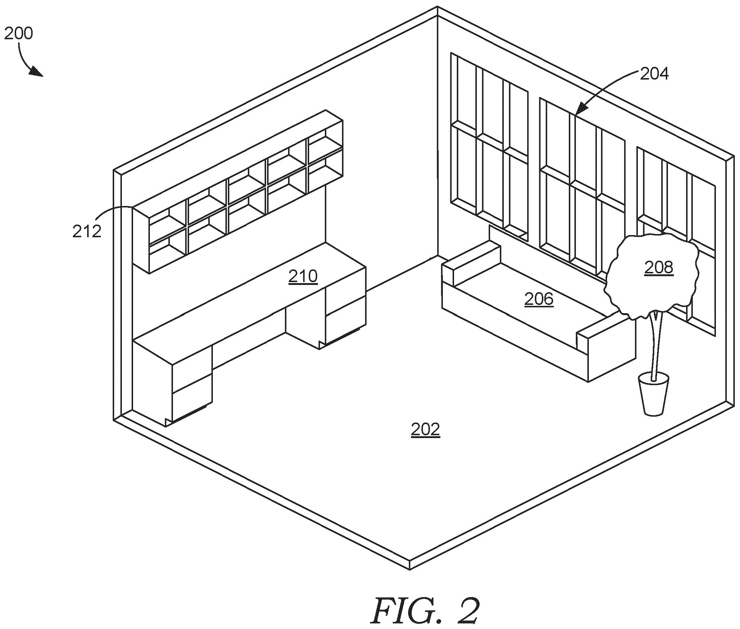

Turning now to FIG. 2, FIG. 2 illustrates example three-dimensional office environment 200, the office environment 200 having a floor 202 and windows 204, the office environment 200 generated to include the following items: a sofa 206, a fake tree 208, a desk 210, and book shelving 212. Other embodiments of example environment 200 may include different items, or more or less items. In addition, other embodiments of example environment 200 may have different window sizes and shapes or could be windowless.

In some embodiments, the positioning of each of the items (the sofa 206, fake tree 208, desk 210, and book shelving 212) may be determined based on a spatial mapping between dimensions of the office environment 200, including the dimensions of the floor 202 and the windows 204 (and the wall in which the windows 204 are on, the wall in which the book shelving 212 is on), and the dimensions of each of the items (the sofa 206, fake tree 208, desk 210, and book shelving 212). In some embodiments, sizes and dimensions can be determined by applying one or more language models (e.g., one or more of a large language model, Bidirectional Encoder Representations from Transformers (BERT), embeddings from language models (ELMo), bidirectional long short-term memory network (BiLSTM), another language model, or one or more combinations thereof) to item listings that include the dimensions for the items or an inverted index that includes the dimensions for the items. In some embodiments, the three-dimensional environment dimensions can be determined from user input, user uploaded images of the environment, or a specification stored within a database, for example.

In embodiments, the three-dimensional environment can be generated using point-based segmentation, voxel-based segmentation, another type of three-dimensional environment generation, or one or more combinations thereof. For example, the point-based segmentation may involve employing a series of multi-layer perceptron blocks and the voxel-based segmentation may involve employing a stack of sparse convolutional layers and using down-sampling and up-sampling of layers to voxel coordinates into discrete locations (e.g., based on the spatial mapping using dimensions of the office environment 200 and dimensions of the items, based on key points identified within the items and within the office environment 200, etc.). In some embodiments, an imaging model (e.g., generative adversarial networks, variational autoencoders, other types of autoencoders, etc.) is trained to identify key points of the items (the sofa 206, fake tree 208, desk 210, and book shelving 212), as well as key points of the office environment 200. In some embodiments, a first imaging model is trained to identify the key points of the items (the sofa 206, fake tree 208, desk 210, and book shelving 212) and a second imaging model is trained to identify the key points of the office environment 200. In other embodiments, different imaging models are used to identify the key points for particular items (e.g., one imaging model is trained to identify key points for the sofa 206, whereas another imaging model is trained to identify key points for the fake tree 208, and yet another imaging model is trained to identify the key points for the desk 210 and book shelving 212).

In some embodiments, a GAN may be trained so that the discriminators of the GAN can determine a distribution of how likely a location within the office environment 200 will contain a particular item (the sofa 206, fake tree 208, desk 210, and book shelving 212) based on prior user interaction data and a determined style. For example, based on prior use interaction data of the user, that particular user may prefer having the sofa 206 positioned closer to the window 204 (e.g., based on user-provided feedback received via a prompt generator, based on that user "liking" various offices that have sofas adjacent to the window, etc.). As another example, the GAN may be trained so that discriminators can determine a distribution of how likely the book shelving 212 would be present within the office environment 200 based on the previous user interaction data and a determined style. For instance, based on previous user interaction data of that particular user, that particular user may prefer book shelving having a particular number of shelving spaces, book shelving that has a longer horizontal width than vertical length, and a book shelf 212 that aligns with the desk 210.

In embodiments, one or more of the language models can be trained to identify particular prior user interaction data for generating the office environment 200 and for determining the desk 210 to include in the office environment. For example, one or more language models can be used to identify prior user interaction histories for other users born within the same time period, as well as other users who are living within the same city. By way of example, an item listing for a desk that has the most purchases, the most views, or the highest ratings by these other users of the same age and demographic may be identified and included within the office environment 200. As another example, one or more of the language models can identify particular desk item listings having a particular style (e.g., ball and claw style) based on the user's previous interaction histories with other desks having this same style.

In some embodiments, one or more language models may be used to summarize particular natural language phrases or sentences provided by the user via a search query, a digital assistant, feedback prompt, etc., to input into another model for generating the office environment 200. For example, one or more language models could be trained to generate a shortened query vector (e.g., for "traditional mahogany desk") for a longer phrase (e.g., "an elegant and sophisticated desk with high quality wood and is not modern") from the user. In some embodiments, one or more language models may be trained to generate an extended search vector (e.g., "artificial palm tree five foot") for a shorter phrase (e.g., "fake trees") based on the user's prior interactions (e.g., the user only purchased palm trees in the past, the user has over a threshold number of "likes" for palm trees) and a determined probability associated with the extended search query (e.g., the probability being based on the previous "likes" as well as the dimensions of the office environment 200, such that the office has a high ceiling and that a four foot palm tree would not look as visually aesthetic as a five foot one).

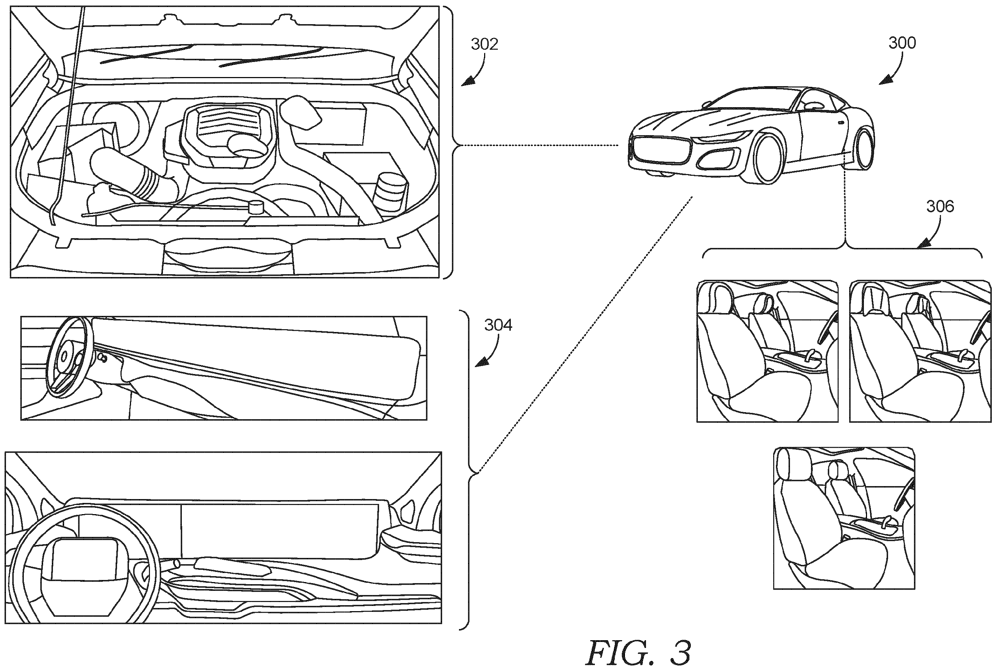

Turning now to FIG. 3, FIG. 3 illustrates example three-dimensional vehicle environment 300, the vehicle environment 300 having a first compartment 302, a second compartment 304, and a third compartment 306. Another example embodiment of the environment of the vehicle could include a trunk compartment.

In some embodiments, one or more generative artificial intelligence models can be trained to identify an item feature within an image of an item from an item corpus (e.g., a leather seating feature for the third compartment 306, a brand and pattern for the seating features for the third compartment 306, a particular brand and volume of brake fluid for the first compartment 302, a dashboard length for the second compartment 304, etc.) for generating a three-dimensional vehicle compartment environment. For example, the model can be trained to identify prior user interaction data from a plurality of other users who made previous purchases associated with dashboard screens having a particular length, such as the length associated with dashboard 304A illustrated within the second compartment 304. Additionally or alternatively, the model can be trained to identify prior user interaction data from a plurality of other users who made previous purchases associated with dashboard screens having a particular resolution or particular antenna capabilities. In some embodiments, the one or more generative artificial intelligence models can determine which of these items have the highest rating, highest number of purchases, highest number of "likes," etc. In some embodiments, the other user interaction data can be compared with the interaction data of this particular user for which the second compartment 304 environment is being generated to determine which dashboard from the item corpus to include in the second compartment 304.

In some embodiments, one or more generative artificial intelligence models can be trained to identify key points or dimensions of items (e.g., seat coverings for the third compartment 306, dashboard dimensions for the second compartment 304, etc.) and key points or dimensions of the first compartment 302, the second compartment 304, and the third compartment 306, so that the items can be methodically placed within the three-dimensional environment. In implementations of this embodiment, one or more texture filling neural network models can be used for generating the items (e.g., a leather texture of the seating within the third compartment 306) within the three-dimensional environment or a feature of the three-dimensional environment (e.g., a smooth and transparent texture for a fluid chamber in the first compartment 302).

In some embodiments, a three-dimensional environment software package or another dimensional environment software package can overlay the determined item listing images (e.g., the dashboard 304A) within an application executing or presenting the vehicle environment. As an example, the environment software package overlaying the images can include development tools, such as source code, code libraries, application programing interfaces (APIs), compilers, data assets, etc., that enable an application (or application administrator) to integrate an environment software package overlay editor (e.g., that can communicate with the e-commerce platform) within an application executing or presenting a particular environment. For instance, the overlay editor data package can include a software development tools that can integrate an overlay editor within an application executing or presenting the particular environment. In some embodiments, one or more large language models can generate the one or more APIs of the software package overlay editor based on the prior user interaction data (e.g., the prior user interaction data from the plurality of other users who made previous purchases associated with dashboard screens having a particular screen size, resolution, and particular antenna capabilities).

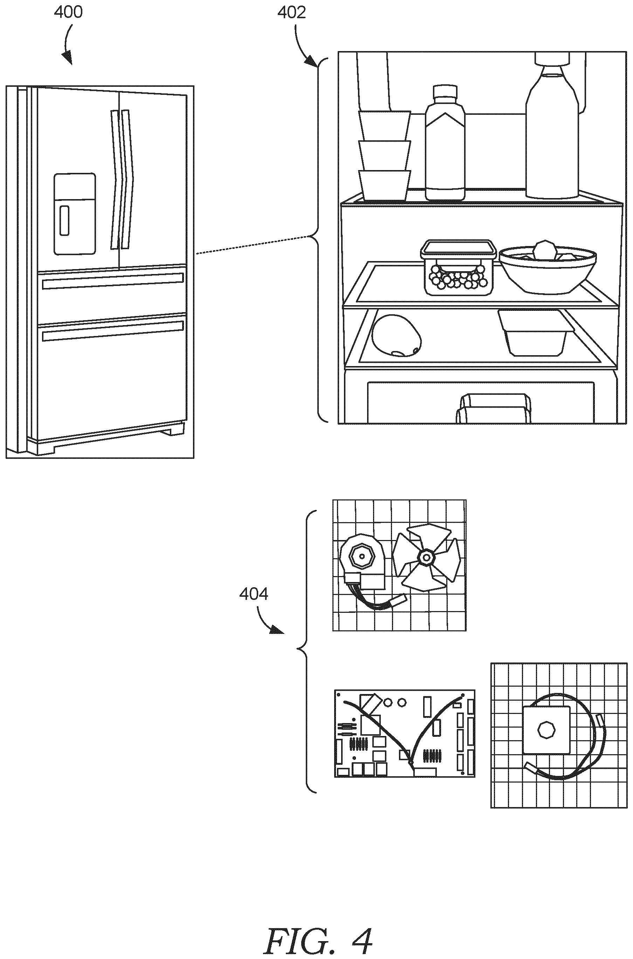

Turning now to FIG. 4, FIG. 4 illustrates example three-dimensional refrigerator environment 400, the refrigerator environment 400 having a first compartment 402 that includes food items (e.g., milk item 402A) placed upon shelving within the first compartment 402, and additional compartments 404 corresponding to operational components of the refrigerator environment 400. Other embodiments of example refrigerator environment 400 may include different food items, or more or less food items. In addition, other embodiments of example refrigerator environment 400 may have more or less shelving in the first compartment 402.

In some embodiments, the positioning of each of the food items (e.g., milk item 402A) within the first compartment 402 may be determined based on a spatial mapping between dimensions of the first compartment 402, including the dimensions of the shelving, and the dimensions of each of the food items (e.g., milk item 402A). In some embodiments, sizes and dimensions can be determined by applying one or more language models (e.g., one or more of a large language model, Bidirectional Encoder Representations from Transformers (BERT), embeddings from language models (ELMo), bidirectional long short-term memory network (BiLSTM), another language model, or one or more combinations thereof) to item listings that include the dimensions for the food items or an inverted index that includes the dimensions for the food items. In some embodiments, the first compartment 402 dimensions can be determined from user input, user uploaded images of the environment, or a specification stored within a database, for example.

In embodiments, the first compartment 402 can be generated using point-based segmentation, voxel-based segmentation, another type of three-dimensional environment generation, or one or more combinations thereof. For example, the point-based segmentation may involve employing a series of multi-layer perceptron blocks and the voxel-based segmentation may involve employing a stack of sparse convolutional layers and using down-sampling and up-sampling of layers to voxel coordinates into discrete locations (e.g., based on the spatial mapping using dimensions of the first compartment 402 and dimensions of the food items, based on key points identified within the items and within the first compartment 402, etc.). In some embodiments, an imaging model (e.g., generative adversarial networks, variational autoencoders, other types of autoencoders, etc.) is trained to identify key points of the food items (e.g., the milk item 402A), as well as key points of the first compartment 402. In some embodiments, a first imaging model is trained to identify the key points of the food items and a second imaging model is trained to identify the key points of the first compartment 402.

In some embodiments, a GAN may be trained so that the discriminators of the GAN can determine a distribution of how likely a location within the first compartment 402 will contain a particular food item based on prior user interaction data and a determined style. For example, based on prior use interaction data of the user, that particular user may prefer having fruit items positioned on the second shelf directly below the top shelf (e.g., based on user-provided feedback received via a prompt generator, based on that user "liking" various refrigerator images that have fruit located within a particular position in the refrigerators, etc.). As another example, the GAN may be trained so that discriminators can determine a distribution of how likely the user would prefer a particular brand of operational components of the refrigerator (e.g., illustrated in additional compartments 404) based on the previous user interaction data and a determined style. In embodiments, one or more of the language models can be trained to identify particular prior user interaction data for generating the first compartment 402 and for determining the food items. For example, one or more language models can be used to identify prior user interaction histories for other users living within the same neighborhood. As another example, an item listing for a particular food container that has the most purchases, the most views, or the highest ratings by these other users of the same demographic may be identified and included within the first compartment 402.

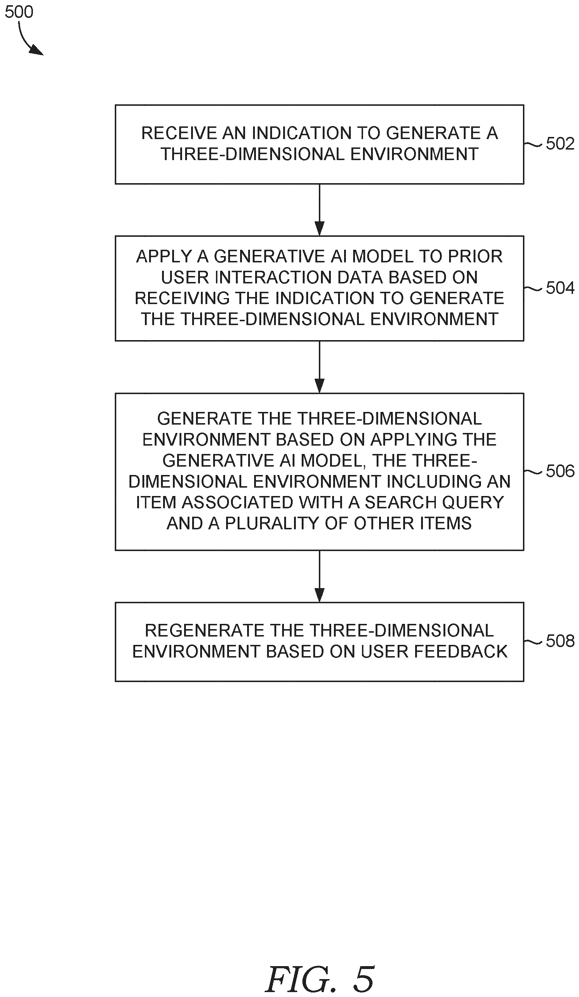

Flowchart 500 of FIG. 5 begins at step 502 with receiving an indication to generate a three-dimensional environment (or another type of dimensional environment). In some embodiments, the three-dimensional environment is associated with a search query. For example, the search query may be a textual search query, an image-based search query, an audio search query, etc. The indication to generate the three-dimensional environment can include the receipt of a selection (e.g., via a selectable icon) to generate the three-dimensional environment, a user voice input at a digital assistant, a particular input at search engine, etc. In some embodiments, the environment is a virtual reality environment, an augmented reality environment, a mixed reality environment, another type of environment, or one or more combinations thereof.

At step 504, a generative artificial intelligence model is applied to prior user interaction data based on receiving the indication to generate the three-dimensional environment. In some embodiments, the prior user interaction data is that of the user who provided the indication to generate the three-dimensional environment, is that of other users who are similar to the user who provided the indication, that of other users having prior user interaction data associated with the search query, other types of prior user interaction data, or one or more combinations thereof. Prior "user interaction data" may include, for example, one or more addresses associated with previous purchases by the user or other users, item listings of items or services corresponding to those previous purchases, item listings of items or services corresponding to a threshold number of previous clicks by the user or other users, item listings having a particular rating, item listings having a threshold number of "likes," scrolling within an item listing for a threshold period of time, hovering over an image of an item within an item listing for a threshold period of time, prior keywords or phrases associated with the search query, prior search query modifications and applied filters, other types of prior user interaction data, or one or more combinations thereof.

In embodiments, one or more generative artificial intelligence models are trained using one or more training datasets including prior user interaction data (e.g., prior user interaction data from other users who made previous purchases associated with a particular vehicle component included in the search query), such that the training dataset includes a plurality of item features (e.g., a type of material and brand for the particular vehicle component) for the item within an item corpus (e.g., an item corpus associated with items available via an e-commerce platform). In some embodiments, the one or more generative artificial intelligence models can identify items within the item corpus based on cookies at the search engine that track specific user interactions with the search engine, a user device fingerprint, a geocoded indicator, an IP address, or another type of user interaction tracking method.

At step 506, the three-dimensional environment is generated. In some embodiments, one or more trained language generative artificial intelligence models can be used to identify an item feature within item listings, the item feature being associated with an item corresponding to the search query to be included within the three-dimensional environment. In some embodiments, two or more of the trained language models can perform tasks simultaneously (e.g., one model determining similar user interactions and another model determining prior user purchases by the particular user who provided the indication, one model determining a particular item feature for the items to be included within the environment and another model determining items related to the search query having the highest ratings). For example, the three-dimensional environment can be generated using items identified by the one or more trained language generative artificial intelligence models or one or more trained imaging generative AI models. In some embodiments, the environment is generated based on the trained language models performing tasks simultaneously and based on the trained imaging models performing task simultaneously.

In some embodiments, one or more of the imaging generative AI models can also be used for positioning and sizing items within the three-dimensional environment, stacking items within the three-dimensional environment, controlling attributes of the items within the three-dimensional environment (e.g., sizing, coloring, lighting, hue, shape), controlling angling of the items within the three-dimensional environment, adjusting the environment size, lighting, shading, hue, shape, etc., combining various aspects between or among items (e.g., applying a particular style of one item to a portion of another item), modifying items within the three-dimensional environment, adding or removing items within the environment, applying or modifying various styles to the environments, among other things. In some embodiments, multiple imaging generative AI models can be used for multi-scale prediction, such that one output from an imaging generative AI model corresponds to item placement within the three-dimensional environment and another output from another imaging generative AI model corresponds to a satisfaction likelihood of that placement (e.g., based on previous user interaction data of that particular user who provided the indication, based on an uploaded photo by that particular user of a real-world image of a living room or closet of that user, etc.). In some embodiments, one output from an imaging generative AI model can correspond to item placement within the three-dimensional environment, another output from another imaging generative AI model can correspond to a size of that item relative to the three-dimensional environment, and another output from another imaging generative AI model can correspond to a texture, color, or pattern of that item relative to a style determined for the user.

In some embodiments, the positioning of items determined from an item corpus to be included within the three-dimensional environment can be based on a spatial mapping between dimensions of the three-dimensional environment (e.g., dimensions from a specification stored in a database for a particular vehicle or vehicle compartment, dimensions determined from an image of the vehicle compartment uploaded by the user) and dimensions of the items. In some embodiments, an imaging model is trained to identify key points of the items within the images of item listings, as well as key points of a three-dimensional environment suitable for containing the items, so that the items can be intelligently placed within the three-dimensional environment. In some embodiments, a first imaging model is trained to identify the key points of the items and a second imaging model is trained to identify the key points of the environment. In some embodiments, different imaging models are used to identify the key points for particular environments (e.g., one imaging model is trained to identify key points for closets while another is trained to identify key points for a particular vehicle compartment). In embodiments, one or more re-projection error algorithms and one or more perspective-n-point algorithms can be used to reduce misaligning the items within the three-dimensional environment (e.g., so that an electric-powered vehicle does not include a gas-powered vehicle component). In embodiments, one or more texture filling neural network models can be used to generate texture features for items (e.g., a gritty texture for sand paper within a toolbox environment) within the three-dimensional environment. In some embodiments, a first texture filling neural network model is used for the texture feature of an item and a second texture filling neural network model is used for the texture feature of the three-dimensional environment (e.g., a smooth and shiny texture for a shelf within the toolbox environment).

In some embodiments, an item (from a corpus of items) associated with the search query is generated for display within the three-dimensional environment, such that the item is generated based on an generative artificial intelligence model (e.g., a neural network) determining that a distance between an item query vector and two corpus item vectors are equidistant, and concatenating the two corpus item vectors to generate the item for display within the three-dimensional environment, such that the generated item for display includes image features of an image corresponding to each of the two corpus item vectors. For example, in some embodiments, the image features corresponding to each of the two corpus item vectors may be one or more of a spatial code, a global codes, a local descriptor, a texture descriptor, an abstraction level descriptor, a color histogram representation, a grayscale histogram representation, another type of item feature, or one or more combinations thereof. As another example, the two corpus item vectors may be separate embeddings generated by one or more neural networks based on a particular style of each corresponding item, a particular color of each corresponding item, a particular dimension or size of each corresponding item, other features associated with each item, or one or more combinations thereof. In some embodiments, the two corpus item vectors may be a dense embedding corresponding to a particular style and particular user interactions associated with the items.

At step 508, the three-dimensional environment is regenerated based on receiving user feedback. For example one or more sensors can be used to receive facial reaction data corresponding to the user in response to generating the three-dimensional environment. The one or more sensors may be user device sensors including an image or video sensor, an audio sensor, a gyroscope, a distance sensor, etc., wherein particular software or algorithms of the search engine can parse the image or video data, as well as the data from the other sensors, to determine facial reaction data of the user upon display of the three-dimensional environment. For example, the facial reaction data can be provided to one or more generative artificial intelligence models, the generative artificial intelligence model being trained to regenerate three-dimensional environments using a plurality of facial reaction data from the plurality of users. For instance, based on the positioning of the user's eyebrows, width of the pupils of the user, lip positioning of the user, etc., (e.g., and based on the model being trained using eyebrow, pupil, and mouth training data from a plurality of other users), the three-dimensional environment can be regenerated to include a different item if the user has a particular eyebrow positioning, pupil width, or lip positioning. The unstructured data associated with the facial reaction data can, in some embodiments, be used to generate structured data for determining user satisfaction associated with the initially generated three-dimensional environment.

In some embodiments, a prompt is provided to the user, so that the user can provide audible or textual feedback corresponding to a style of the environment, an item within the environment, a size of the item within the environment, an item feature of the item in the environment, etc. For example, the user may textually or audibly indicate that the item should be moved to a different position and may describe the position that is more desirable. As another example, the user may select an item within the environment and indicate that a particular color of the item should be changed. In yet another example, the user may indicate, via the prompt, that the item should be longer at a particular key point on that item. In some embodiments, the user may select the item illustrated within the environment, and a plurality of different images associated with that item could be subsequently provided to the user, each of the plurality of images corresponding to an image for an item listing. In response, the user could then select one of the plurality of images, wherein the three-dimensional environment is regenerated based on the selected image such that the regenerated three-dimensional environment includes the selected image. In some embodiments, the three-dimensional environment is regenerated by a second model that is different from another generative artificial intelligence model that initially generated the environment. For example, in an embodiment, an item could be generated within the environment using a generative adversarial network, and the item could be replaced with a second item using a variational autoencoder.

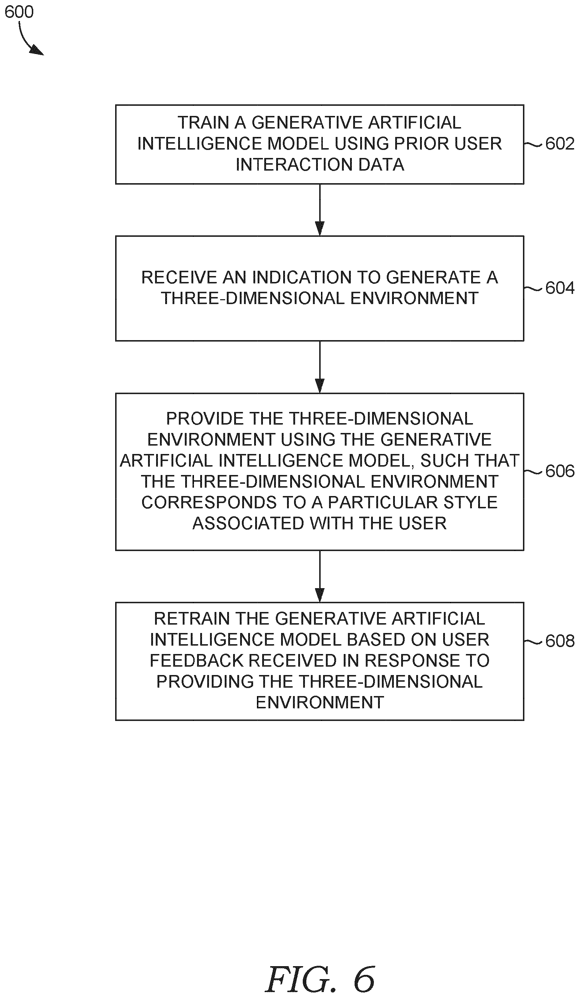

Flowchart 600 of FIG. 6 begins at step 602 with training a generative AI model using prior user interaction data. In some embodiments, the training data can include particular extracted data from an item corpus that is associated with the prior user interaction data. For example, the training data can include user interaction data from a plurality of users associated with a particular style of a particular set of items. In a non-limiting example, a language model can be trained to identify a particular curvature in a particular set of items based on particular dimensions within item listings having tagged dimension data. In some embodiments, one or more language models can be trained to identify particular ratings by a particular number of users, or trained to identify particular brands having a higher quality than other brands. In some embodiments, one or more language models can be trained for the transfer of learning from related tasks, such that one of the language models is initially trained on a broader task, and another language model is trained from that model on a more specific and narrow task. Additionally, imaging models can be trained for positioning and sizing items within the three-dimensional environment, stacking items within the three-dimensional environment, controlling attributes of the items within the three-dimensional environment (e.g., sizing, coloring, lighting, hue, shape), controlling angling of the items within the three-dimensional environment, adjusting the environment size, lighting, shading, hue, shape, etc., combining various aspects between or among items (e.g., applying a particular style of one item to a portion of another item), modifying items within the three-dimensional environment, adding or removing items within the environment, applying or modifying various styles to the environments, etc.

At step 604, an indication is received to generate the three-dimensional environment, and at step 606, the environment is provided to the user based on using one or more generative Al models, such that the environment corresponds to a particular style associated with the user. For example, a style may be determined for the user based on prior user interactions via that user or prior user interactions via similar users. For instance, a large language model can be applied to identify particular item listings of drones having over a threshold number of other male purchasers within the same age range as the user, and drone purchases associated with delivery addresses within the same geographical area as the user. As another example, a first large language model may be applied to determine the first set of item listings associated with the purchasers within the same age range, and a second large language model may be applied to determine the second set of listings for drone purchases within the same geographical area. In some embodiments, one or more language models are applied to one or more tables of a search index including previous user interaction data of the same user who provided the indication to generate the three-dimensional environment, wherein the one or more tables include a plurality of search queries previously entered at a plurality of websites and applications by the user, wherein columns of that table include keywords associated with the indication to generate the environment.

At step 608, the model is retrained based on user feedback. In some embodiments, the user feedback includes textual natural language, such that a large language model is retrained using the textual natural language and an updated style associated with an item that was included within the initially generated environment. In some embodiments, one or more generative artificial intelligence models are retrained, to regenerate three-dimensional environments, using a training dataset comprising a plurality of frames associated with a video input that include a plurality of facial reaction data from a plurality of users, wherein each of the plurality of frames of the training dataset include a facial reaction label. For example, the facial reaction labels may include indications as to whether the user was satisfied or unsatisfied. In some embodiments, the facial reaction labels may also include labels that the user indicated neither satisfaction nor dissatisfaction.

In some embodiments, one or more generative artificial intelligence models is a deep neural network, the deep neural network being trained using the training dataset that includes the facial reaction labels. In some embodiments, the deep neural network may be configured to extract, in real-time or near real-time, a facial reaction of a horizontal axis verses a vertical axis corresponding to a frame of the facial reaction data corresponding to the user. In some embodiments, the labels are generated via one or more classifiers that are machine-learning based algorithms capable of determining values associated with facial expressions depicted within frames of an image or video. In some embodiments, one or more re-proj ection error algorithms or perspective-n-point algorithms can be applied to one or more generative AI models, based on user feedback associated with a particular item, to reduce misaligning or mischaracterizing the items within the three-dimensional environment.

Having described an overview of embodiments of the present technology, an example operating environment in which embodiments of the present technology may be implemented is described below in order to provide a general context for various aspects. Referring initially to FIG. 7, in particular, an example operating environment for implementing embodiments of the present technology is shown and designated generally as computing device 700. Computing device 700 is but one example of a suitable computing environment and is not intended to suggest any limitation as to the scope of use or functionality of the technology. Neither should computing device 700 be interpreted as having any dependency or requirement relating to any one or combination of components illustrated.

The technology of the present disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 7, computing device 700 includes bus 702 that directly or indirectly couples the following devices: memory 704, one or more processors 706, one or more presentation components 708, input/output ports 710, input/output components 712, and illustrative power supply 714. Bus 702 represents what may be one or more busses (such as an address bus, data bus, or combination thereof). Although the various blocks of FIG. 7 are shown with lines for the sake of clarity, in reality, delineating various components is not so clear, and metaphorically, the lines would more accurately be grey and fuzzy. For example, one may consider a presentation component, such as a display device, to be an I/O component. As another example, processors may also have memory. Such is the nature of the art, and it is again reiterated that the diagram of FIG. 7 is merely illustrates an example computing device that can be used in connection with one or more embodiments of the present technology. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, and removable and non-removable media. By way of example, and not limitation, computer-readable media may comprise computer storage media and communication media.

Computer storage media include volatile and nonvolatile, removable and non-removable media implemented in any method or technology for storage of information, such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media.

Memory 704 includes computer storage media in the form of volatile or nonvolatile memory. The memory 704 may be removable, non-removable, or a combination thereof. Example hardware devices include solid-state memory, hard drives, optical-disc drives, etc. Computing device 700 includes one or more processors that read data from various entities such as memory 704 or I/O components 712. Presentation component(s) 708 present data indications to a user or other device. Examples of presentation components include a display device, speaker, printing component, vibrating component, etc.

I/O ports 710 allow computing device 700 to be logically coupled to other devices including I/O components 712, some of which may be built in. Illustrative components include a microphone, joystick, game pad, satellite dish, scanner, printer, wireless device, and so forth.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the word "including" or "having" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media. Unless expressly indicated otherwise, the term "training," when referring to machine learning, may include actions such as an initial training or fine-tuning a pre-trained model. Training may include any one or more training steps, such as a series of training or optimization steps.

In addition, words such as "a" and "an," unless otherwise indicated to the contrary, include the plural as well as the singular. Thus, for example, the constraint of "a feature" is satisfied where one or more features are present. Furthermore, the term "or" includes the conjunctive, the disjunctive, and both (*a* or *b* thus includes either *a* or *b*, as well as *a* and *b*).

For purposes of a detailed discussion above, embodiments of the present technology described with reference to a distributed computing environment; however, the distributed computing environment depicted herein is merely an example. Components can be configured for performing novel aspects of embodiments, where the term "configured for" or "configured to" can refer to "programmed to" perform particular tasks or implement particular abstract data types using code. Further, while embodiments of the present technology may generally refer to the distributed data object management system and the described schematics, it is understood that the techniques described may be extended to other implementation contexts.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated the accompanying drawings is to be interpreted as illustrative and not in a limiting sense.

Some example aspects of the technology that may be practiced from the forgoing disclosure include the following:

Aspect 1: A computer-implemented method comprising: receiving an indication to generate a three-dimensional environment, the three-dimensional environment being associated with a search query; identifying previous user interaction data corresponding to the indication, the previous user interaction data being associated with a user providing the indication; providing the previous user interaction data to a generative artificial intelligence model trained on user interaction data from a plurality of users; based on providing the previous user interaction data to the generative artificial intelligence model, generating the three-dimensional environment for the user and providing a prompt, based on providing the prompt, receiving user feedback from the user via the prompt; and based on receiving the user feedback, regenerating the three-dimensional environment.

Aspect 2: Aspect 1, wherein the previous user interaction data includes previous purchases by the user.

Aspect 3: Aspect 1 or 2, further comprising: receiving, via one or more sensors, facial reaction data corresponding to the user in response to generating the three-dimensional environment; providing the facial reaction data to the generative artificial intelligence model, the generative artificial intelligence model being trained to regenerate three-dimensional environments using a plurality of facial reaction data from the plurality of users; and regenerating the three-dimensional environment based on providing the facial reaction data corresponding to the user to the generative artificial intelligence model.

Aspect 4: Aspect 1, 2, or 3, wherein the three-dimensional environment corresponds to a vehicle and the search query provided by the user corresponds to a vehicle part for the vehicle, and wherein the prompt and the user feedback correspond to a style of the vehicle.

Aspect 5: Aspect 1, 2, 3, or 4, wherein providing the prompt and receiving the user feedback comprise: providing a plurality of images associated with the search query provided by the user, each of the plurality of images corresponding to an image for an item listing; and receiving a selection of one of the plurality of images, wherein the three-dimensional environment is regenerated based on the selected image such that the regenerated three-dimensional environment includes the selected image.

Aspect 6: Aspect 1, 2, 3, 4, or 5, wherein the three-dimensional environment is regenerated by a second model that is different from the generative artificial intelligence model.

Aspect 7: Aspect 1, 2, 3, 4, 5, or 6, further comprising: wherein regenerating the three-dimensional environment is further based on applying a large language model to the user feedback that includes textual natural language, the large language model being trained using prior user feedback that includes textual natural language and particular styles associated with an item corresponding to the search query.

Aspect 8: Aspect 1, 2, 3, 4, 5, 6, or 7, wherein the user feedback used to train the large language model includes labels for an age and demographic associated with a user who provided the prior user feedback, such that the three-dimensional environment is regenerated further based on a corresponding age and demographic associated with a user who provided the search query.

Aspect 9: Aspect 1, 2, 3, 4, 5, 6, 7, or 8, wherein an item associated with the search query is generated, prior to regenerating the three-dimensional environment, for display within the three-dimensional environment using a corpus of items, such that the item associated with the search query is generated based on the generative artificial intelligence model determining that a distance between an item query vector and two corpus item vectors are equidistant, and concatenating the two corpus item vectors to generate the item for display within the three-dimensional environment, such that the generated item for display includes image features of an image corresponding to each of the two corpus item vectors.

Aspect 10: a computer system comprising: a processor; and a computer storage medium storing computer-useable instructions that, when used by the processor, causes the computer system to perform operations comprising: receiving an indication to generate a three-dimensional environment, the three-dimensional environment being associated with a search query, the search query being associated with at least one item; identifying previous user interaction data corresponding to the indication; training a generative artificial intelligence model to identify a style associated with item using a training dataset including prior user interaction data from a plurality of users and a training dataset including a plurality of styles for the at least one item of an item corpus; providing the at least one item associated with the search query and the previous user interaction data to the trained generative artificial intelligence model; based on providing the at least one item and the previous user interaction data to the generative artificial intelligence model, generating the three-dimensional environment; based on providing the three-dimensional environment, receiving user feedback; and based on receiving the user feedback, regenerating the three-dimensional environment.

Aspect 11: Aspect 10, further comprising: receiving, via one or more sensors in real-time, facial reaction data corresponding to the user in response to generating the three-dimensional environment; providing the facial reaction data to the generative artificial intelligence model, the generative artificial intelligence model being trained to regenerate three-dimensional environments using a training dataset comprising a plurality of frames associated with a video input that include a plurality of facial reaction data from the plurality of users, wherein each of the plurality of frames of the training dataset include a facial reaction label; and regenerating the three-dimensional environment based on providing the facial reaction data corresponding to the user to the generative artificial intelligence model.

Aspect 12: Aspect 10, or 11, wherein the generative artificial intelligence model includes a deep neural network, the deep neural network being trained using the training dataset, the deep neural network being configured to extract, in real-time, a facial reaction of a horizontal axis verses a vertical axis corresponding to a frame of the facial reaction data corresponding to the user.

Aspect 13: Aspect 10, 11, or 12, wherein the three-dimensional environment corresponds to an indoor room and the search query provided by the user corresponds to a furniture item for the indoor room, and wherein the user feedback corresponds to the style associated with the furniture item.

Aspect 14: Aspect 10, 11, 12, or 13, wherein the three-dimensional environment is regenerated to include a different three-dimensional image of the furniture item based on the user feedback corresponding to the style associated with the furniture item provided prior to regenerating the three-dimensional environment.

Aspect 15: one or more computer storage media storing computer-useable instructions that, when used by a computing device, cause the computing device to perform operations, the operations comprising: training a generative artificial intelligence model to identify an item feature associated with a search query item using a training dataset including prior user interaction data from a plurality of users, a training dataset including a plurality of item features for each of a plurality of items within an item corpus, and a training dataset including prior search queries; receiving a search query and an indication to generate a three-dimensional environment for the search query, the search query being associated with at least one item; retrieving previous user interaction data corresponding to the indication to generate the three-dimensional environment for the search query; and providing the search query and the previous user interaction data to the trained generative artificial intelligence model to generate the three-dimensional environment that includes the at least one item.

Aspect 16: Aspect 15, wherein the generative artificial intelligence model includes Bidirectional Encoder Representations from Transformers (BERT).

Aspect 17: Aspect 15 or 16, further comprising: causing to provide for display the three-dimensional environment that includes the at least one item; based on providing the three-dimensional environment, receiving user feedback; and based on receiving the user feedback, causing to display a regenerated three-dimensional environment, such that the regenerated three-dimensional environment includes another three-dimensional image of the at least one item that has a different item feature based on the user feedback.

Aspect 18: Aspect 15, 16, or 17, wherein the regenerated three-dimensional environment includes items related to the at least one item.

Aspect 19: Aspect 15, 16, 17, or 18, wherein the generative artificial intelligence model includes image processing algorithms, and wherein the BERT is trained using the training dataset including the prior search queries and the image processing algorithms are trained using the training dataset including the plurality of item features for each of the plurality of items within the item corpus.

Aspect 20: Aspect 15, 16, 17, 18, or 19, wherein the user feedback includes audio data corresponding to the item feature associated with the search query item.

## Claims

1. A computer-implemented method comprising:
receiving a search query;
identifying previous user interaction data, the previous user interaction data being associated with a user providing the search query;
providing the previous user interaction data to a generative artificial intelligence model trained on user interaction data from a plurality of users;
based on providing the previous user interaction data to the generative artificial intelligence model, generating a three-dimensional environment;
receiving user feedback from the user; and
based on receiving the user feedback, regenerating the three-dimensional environment.

2. The computer-implemented method of claim 1, wherein the previous user interaction data includes previous purchases by the user.

3. The computer-implemented method of claim 1 or 2, further comprising:
receiving, via one or more sensors, facial reaction data corresponding to the user in response to generating the three-dimensional environment;
providing the facial reaction data to the generative artificial intelligence model, the generative artificial intelligence model being trained to regenerate three-dimensional environments using a plurality of facial reaction data from the plurality of users; and
regenerating the three-dimensional environment based on providing the facial reaction data corresponding to the user to the generative artificial intelligence model.

4. The computer-implemented method of any one of claims 1 to 3, wherein the three-dimensional environment corresponds to a vehicle and the search query corresponds to a vehicle part for the vehicle, and wherein the user feedback corresponds to a style of the vehicle; and/or
wherein the three-dimensional environment is regenerated by a second model that is different from the generative artificial intelligence model.

5. The computer-implemented method of any one of claims 1 to 4, wherein receiving the user feedback comprises:
providing a plurality of images associated with the search query, each of the plurality of images corresponding to an image for an item listing; and
receiving a selection of one of the plurality of images, wherein the three-dimensional environment is regenerated based on the selected image such that the regenerated three-dimensional environment includes the selected image.

6. The computer-implemented method of any one of claims 1 to 5, wherein regenerating the three-dimensional environment is further based on applying a large language model to the user feedback that includes textual natural language, the large language model being trained using prior user feedback that includes textual natural language and particular styles associated with an item corresponding to the search query;
and wherein, optionally, the user feedback used to train the large language model includes labels for an age and demographic associated with a user who provided the prior user feedback, such that the three-dimensional environment is regenerated further based on a corresponding age and demographic associated with a user who provided the search query.

7. The computer-implemented method of any one of claims 1 to 6, wherein an item associated with the search query is generated, prior to regenerating the three-dimensional environment, for display within the three-dimensional environment using a corpus of items, such that the item associated with the search query is generated based on the generative artificial intelligence model determining that a distance between an item query vector and two corpus item vectors are equidistant, and concatenating the two corpus item vectors to generate the item for display within the three-dimensional environment, such that the generated item for display includes image features of an image corresponding to each of the two corpus item vectors.

8. A computer system comprising:
a processor; and
a computer storage medium storing computer-useable instructions that, when used by the processor, causes the computer system to perform operations comprising:
providing at least one item associated with a search query and previous user interaction data to a trained generative artificial intelligence model;
based on providing the at least one item and the previous user interaction data to the generative artificial intelligence model, generating a three-dimensional environment;
based on providing the three-dimensional environment, receiving user feedback; and
based on receiving the user feedback, regenerating the three-dimensional environment.

9. The computer system of claim 8, further comprising:
receiving, via one or more sensors in real-time, facial reaction data corresponding to the user in response to generating the three-dimensional environment;
providing the facial reaction data to the generative artificial intelligence model, the generative artificial intelligence model being trained to regenerate three-dimensional environments using a training dataset comprising a plurality of frames associated with a video input that include a plurality of facial reaction data from the plurality of users, wherein each of the plurality of frames of the training dataset include a facial reaction label; and
regenerating the three-dimensional environment based on providing the facial reaction data corresponding to the user to the generative artificial intelligence model;
wherein, optionally, the generative artificial intelligence model includes a deep neural network, the deep neural network being trained using the training dataset, the deep neural network being configured to extract, in real-time, a facial reaction of a horizontal axis verses a vertical axis corresponding to a frame of the facial reaction data corresponding to the user.

10. The computer system of claim 8 or 9, wherein the three-dimensional environment corresponds to an indoor room and the search query provided by the user corresponds to a furniture item for the indoor room, and wherein the user feedback corresponds to the style associated with the furniture item;
and wherein, optionally, the three-dimensional environment is regenerated to include a different three-dimensional image of the furniture item based on the user feedback corresponding to the style associated with the furniture item provided prior to regenerating the three-dimensional environment.

11. One or more non-transitory computer storage media storing computer-useable instructions that, when used by a user device, cause the user device to perform operations, the operations comprising:
training a generative artificial intelligence model to identify an item feature associated with a search query item using a training dataset including prior user interaction data from a plurality of users, a training dataset including a plurality of item features for each of a plurality of items within an item corpus, and a training dataset including prior search queries;
receiving a search query, the search query being associated with at least one item;
retrieving previous user interaction data; and
providing the search query and the previous user interaction data to a trained generative artificial intelligence model to generate a three-dimensional environment that includes the at least one item.

12. The one or more non-transitory computer storage media of claim 11, wherein the generative artificial intelligence model includes Bidirectional Encoder Representations from Transformers (BERT).

13. The one or more non-transitory computer storage media of claim 11 or 12, further comprising:
causing to provide for display the three-dimensional environment that includes the at least one item;
based on providing the three-dimensional environment, receiving user feedback; and
based on receiving the user feedback, causing to display a regenerated three-dimensional environment, such that the regenerated three-dimensional environment includes another three-dimensional image of the at least one item that has a different item feature based on the user feedback.

14. The one or more non-transitory computer storage media of claim 13, wherein the regenerated three-dimensional environment includes items related to the at least one item; and/or
wherein the user feedback includes audio data corresponding to the item feature associated with the search query item.

15. The one or more non-transitory computer storage media of claim 12, wherein the generative artificial intelligence model includes image processing algorithms, and wherein the BERT is trained using the training dataset including the prior search queries and the image processing algorithms are trained using the training dataset including the plurality of item features for each of the plurality of items within the item corpus.
